(19) **Europäisches Patentamt European Patent Office Office européen des brevets**

(11) **EP 4 772 982 A1**

(12) **EUROPEAN PATENT APPLICATION**
published in accordance with Art. 153(4) EPC

(43) Date of publication:
08.07.2026 Bulletin 2026/28

(51) International Patent Classification (IPC):
*G06F 3/0484* (2022.01)    *G06F 1/16* (2006.01)
*G06F 3/048* (2013.01)    *G01D 5/14* (2006.01)

(21) Application number: 25805933.6

(22) Date of filing: 08.09.2025

(52) Cooperative Patent Classification (CPC):
G01D 5/14; G06F 1/16; G06F 3/0481;
G06F 3/0484; H04M 1/72454

(86) International application number:
PCT/KR2025/013900

(87) International publication number:
WO 2026/059253 (19.03.2026 Gazette 2026/12)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 12.09.2024 KR 20240124958
16.10.2024 KR 20240140852

(71) Applicant: Samsung Electronics Co., Ltd.
Suwon-si, Gyeonggi-do 16677 (KR)

(72) Inventors:
• **MIN, Byungwoo**
Suwon-si, Gyeonggi-do 16677 (KR)
• **KIM, Koeun**
Suwon-si, Gyeonggi-do 16677 (KR)
• **KIM, Sangheon**
Suwon-si, Gyeonggi-do 16677 (KR)
• **KIM, Jeongseob**
Suwon-si, Gyeonggi-do 16677 (KR)
• **EOM, Junbong**
Suwon-si, Gyeonggi-do 16677 (KR)

(74) Representative: **HGF**
HGF Limited
4th Floor, 1 City Square
Leeds LS1 2ES (GB)

(54) **MULTI-FOLDABLE ELECTRONIC DEVICE FOR DISPLAYING NOTIFICATION INFORMATION**

(57) A multi-foldable electronic device according to an embodiment may display an execution screen of an application on the sub display while the first side member is disposed adjacent to the second side member, display an object indicating first event occurrence in the multi-foldable electronic device on the execution screen of the application while the first side member is disposed adjacent to the second side member, identify a first display region between the first side member and the second side member in the whole region of the flexible display as the first side member moves away from the second side member on the flexible display, and display first notification information related to the first event on the identified first display region.

FIG.6

## Description

[Technical Field]

The disclosure relates generally to a multi-foldable electronic device for displaying notification information.

[Background Art]

An electronic device is developed as a portable or wearable type to improve its mobility and accessibility. Such an electronic device gets lighter and thinner for ease of portability, and evolves for convenience of use.

For example, a foldable electronic device having a flexible display, which provides a relatively larger screen than a general bar-type electronic device and decreases in size if it is folded to thus improve portability, is spotlighted as an electronic device for satisfying consumer preference.

Such a foldable electronic device may include the flexible display and a plurality of housings, and the plurality of housings and the flexible display may be connected by a hinge assembly, to rotate the housing within a designated range according to a user's manipulation. By rotating the plurality of housings, the electronic device may switch from a folded state to an unfolded state, or switch from the unfolded state to the folded state.

The foregoing information may be provided as related art for the purpose of aiding understanding of the disclosure. No claim or determination is made as to whether any of the foregoing may be applied as the prior art in connection with the disclosure.

[Disclosure of Invention]

[Solution to Problem]

A multi-foldable electronic device according to an embodiment of the disclosure may include a foldable housing including a first housing, a second housing and a third housing. The second housing may be disposed between the first housing and the third housing. The multi-foldable electronic device may include a first hinge rotatably connecting the first housing and the second housing, a second hinge rotatably connecting the second housing and the third housing, a flexible display disposed at least in part on a front side of the first housing, a front side of the second housing and a front side of the third housing, a sub-display disposed on a rear side opposite to the front side of the first housing, a memory for storing instructions, and at least one processor. The instructions may be executed by the at least one processor, to cause the multi-foldable electronic device to identify a first orientation of the foldable housing in which a first side member of the first housing is disposed adjacent to a second side member of the third housing. The instructions may be executed by the at least one processor, to cause the multi-foldable electronic device to display an execution screen of an application on the sub-display, based on identifying that the foldable housing is in the first orientation. The instructions may be executed by the at least one processor, to cause the multi-foldable electronic device to, while the foldable housing is in the first orientation, display the execution screen of the application and an object indicating first event occurrence on the sub-display. The instructions may be executed by the at least one processor, to cause the multi-foldable electronic device to identify that the foldable housing moves from the first orientation, to a second orientation in which the first side member of the first housing is disposed on the front side and the first side member is spaced away from the second side member of the third housing. The instructions may be executed by the at least one processor, to cause the multi-foldable electronic device to, based on identifying that the foldable housing moves from the first orientation to the second orientation, display first notification information related to the first event on a part of the flexible display exposed between the first side member of the first housing and the second side member of the third housing.

In an operating method of a multi-foldable electronic device according to an embodiment of the disclosure, the multi-foldable electronic device may include a foldable housing including a first housing, a second housing and a third housing. The second housing may be disposed between the first housing and the third housing. The multi-foldable electronic device may include a first hinge rotatably connecting the first housing and the second housing, a second hinge rotatably connecting the second housing and the third housing, a flexible display disposed at least in part on a front side of the first housing, a front side of the second housing and a front side of the third housing, and a sub-display disposed on a rear side opposite to the front side of the first housing. The method may include identifying a first orientation of the foldable housing in which a first side member of the first housing is disposed adjacent to a second side member of the third housing, displaying an execution screen of an application on the sub-display, based on identifying that the foldable housing is in the first orientation, while the foldable housing is in the first orientation, displaying the execution screen of the application and an object indicating first event occurrence on the sub-display, identifying that the foldable housing moves from the first orientation, to a second orientation in which the first side member of the first housing is disposed on the front surface and the first side member is spaced away from the second side member of the third housing, and, based on identifying that the foldable housing moves from the first orientation to the second orientation, displaying first notification information related to the first event on a part of the flexible display exposed between the first side member of the first housing and the second side member of the third housing.

[Brief Description of Drawings]

FIG. 1 is a front view of a multi-foldable electronic device according to an embodiment.

FIG. 2 is a rear view of a multi-foldable electronic device according to an embodiment.

FIG. 3 is a side view of a multi-foldable electronic device in a first orientation according to an embodiment.

FIG. 4 is a side view of a multi-foldable electronic device in a second orientation according to an embodiment.

FIG. 5 is a side view of a multi-foldable electronic device in a third orientation according to an embodiment.

FIG. 6 is a diagram illustrating an example in which some region of a flexible display of a flexible display is exposed in a fourth orientation according to an embodiment.

FIG. 7 is a side view of a multi-foldable electronic device in a fourth orientation according to an embodiment.

FIG. 8 is a flowchart illustrating a process of a method for a multi-foldable electronic device to display first notification information in a first display region according to an embodiment.

FIG. 9 is a flowchart illustrating a process of a method for a multi-foldable electronic device to identify whether a first side member of a first housing is disposed at a position adjacent to a second side member of a third housing using a first sensor and a second sensor according to an embodiment.

FIG. 10 is a diagram illustrating a first folding angle between a first housing and a second housing and a second folding angle between a second housing and a third housing according to an embodiment.

FIG. 11 is a flowchart illustrating a process of a method for a multi-foldable electronic device to identify whether a first side member of a first housing is disposed at a position adjacent to a second side member of a third housing using a first Hall sensor and a second Hall sensor according to an embodiment.

FIG. 12 is a diagram illustrating an arrangement of a first Hall sensor of a first housing and a second Hall sensor of a third housing according to an embodiment.

FIG. 13 is a diagram illustrating an object displayed on a sub-display according to an embodiment.

FIG. 14 is a diagram illustrating an example of an object displayed on a sub-display according to an embodiment.

FIG. 15 is a diagram illustrating a process of a method for a multi-foldable electronic device to identify a first display region using a first sensor and a second sensor according to an embodiment.

FIG. 16 is a diagram illustrating an example in which a multi-foldable electronic device identifies a first display region using a first sensor and a second sensor according to an embodiment.

FIG. 17 is a diagram illustrating a process of a method for a multi-foldable electronic device to identify a first display region using a first Hall sensor and a third Hall sensor according to an embodiment.

FIG. 18 is a diagram illustrating an example in which a multi-foldable electronic device identifies a first display region using a first Hall sensor and a third Hall sensor according to an embodiment.

FIG. 19 is a diagram in which a multi-foldable electronic device displays first notification information on a first display region according to an embodiment.

FIG. 20 is a diagram illustrating a process of a method for determining notification information to be displayed based on a size of a first display region according to an embodiment.

FIG. 21 is a diagram illustrating an example in which a multi-foldable electronic device emits light in at least a part of a first display region in a range where a size of the first display region is smaller than a first range according to an embodiment.

FIG. 22 is a diagram illustrating an example in which a multi-foldable electronic device displays first notification information on a first display region, if a size of the first display region falls within a first range according to an embodiment.

FIG. 23 is a diagram illustrating an example in which a multi-foldable electronic device displays second notification information or third notification information on a first display region, if a size of the first display region falls within a second range or a third range which is greater than a first range according to an embodiment.

FIG. 24 is a diagram illustrating an example in which a multi-foldable electronic device displays fourth notification information on a sub-display, if a size of the first display region is greater than a third range according to an embodiment.

FIG. 25 is a diagram illustrating an example of displaying notification information and an application execution screen on a flexible display, if a multi-foldable electronic device is unfolded according to an embodiment.

FIG. 26 is a diagram illustrating an example of a multi-foldable electronic device displaying on a sub-display a user interface (UI) for guiding to move a first side member away from a second side member according to an embodiment.

FIG. 27 is a diagram illustrating an example of a multi-foldable electronic device displaying first notification information on a first display, with a third housing placed on a floor according to an embodiment.

FIG. 28 is a diagram illustrating an example of a multi-foldable electronic device displaying first notification information on a first display, with a second housing placed on a floor according to an embodiment.

FIG. 29 is a diagram illustrating an example of a multi-foldable electronic device displaying first notification information on a first display, with a third side member placed on a floor according to an embodiment.

FIG. 30 is a block diagram of an electronic device in a network environment according to an embodiment.

In relation to descriptions of the drawings, like or similar reference numerals may be used for like or similar components.

[Mode for the Invention]

Hereinafter, various embodiments of the invention are disclosed with reference to the attached drawings. However, it should be understood that this is not intended to limit the invention to specific embodiments, and embraces various modifications, equivalents, and/or alternatives of embodiments of the invention.

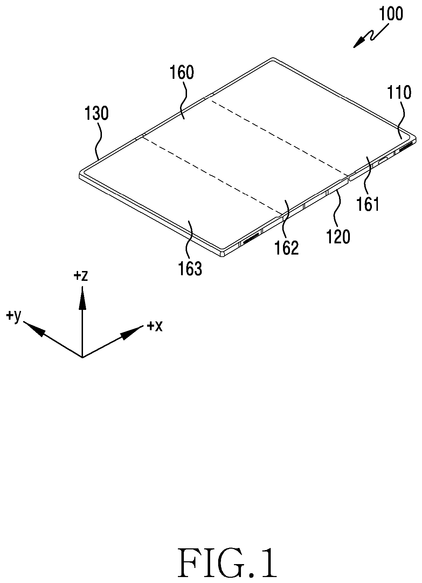

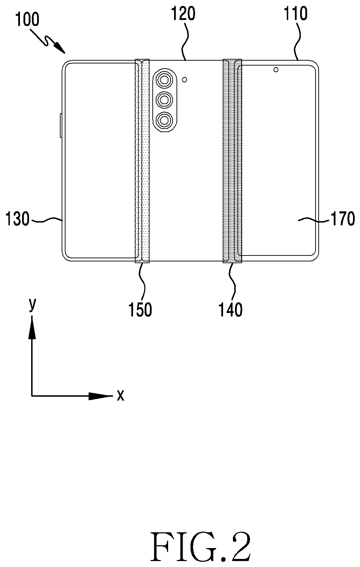

FIG. 1 is a front view of a multi-foldable electronic device according to an embodiment. FIG. 2 is a rear view of a multi-foldable electronic device according to an embodiment.

According to an embodiment of the disclosure, a multi-foldable electronic device 100 may include a first housing 110, a second housing 1 20, a third housing 130, a first hinge 140, a second hinge 150 and a flexible display 160. The first hinge 140 may be disposed between the first housing 110 and the second housing 120. The first hinge 140 may rotatably connect the first housing 110 and the second housing 120.

According to an embodiment, the second hinge 150 may be disposed between the second housing 120 and the third housing 130. The second hinge 150 may rotatably connect the second housing 120 and the third housing 130. The flexible display 160 may be disposed at least in part in the first housing 110, the second housing 120 and the third housing 130.

According to an embodiment, the flexible display 160 may be disposed to cross at least a part of the first hinge 140 and the second hinge 150. The flexible display 160 may be folded or unfolded by the first hinge 140 and the second hinge 150.

According to an embodiment of the disclosure, referring to FIG. 1, the flexible display 160 may include a first display portion 161, a second display portion 162 and a third display portion 163. For example, the first display portion 161 may be a region disposed in the first housing 110 in the entire region of the flexible display 160. For example, the second display portion 162 may be a region disposed in the second housing 120 in the entire region of the flexible display 160. For example, the third display portion 163 may be a region disposed in the third housing 130 in the entire region of the flexible display 160.

According to an embodiment of the disclosure, referring to FIG. 2, the first housing 110 may include a sub-display 170. For example, the sub-display 170 may be disposed on an opposite side of a side where the first display portion 161 of the first housing 110 is disposed. For example, the sub-display 170 may be disposed on a side where a cover member of the first housing 110 is disposed. For example, the sub-display 170 may configure at least a part of an exterior of the multi-foldable electronic device 110.

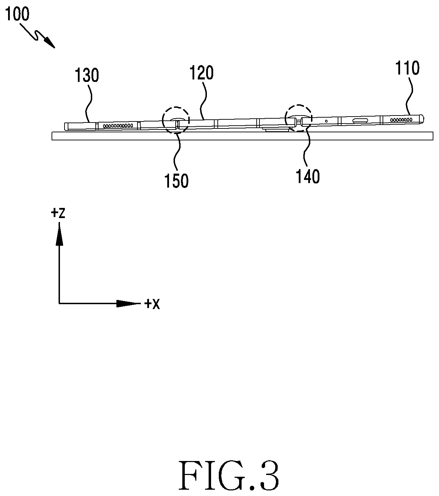

FIG. 3 is a side view of a multi-foldable electronic device in a first orientation according to an embodiment.

According to an embodiment of the disclosure, referring to FIG. 3, the first orientation of the multi-foldable electronic device 100 may include a state where the multi-foldable electronic device 100 is unfolded by the first hinge 140, and unfolded by the second hinge 150. For example, in the first orientation with the multi-foldable electronic device 100 unfolded by the first hinge 140 and the second hinge 150, the first housing 110, the second housing 120 and the third housing 130 may be arranged substantially in parallel. For example, in the first orientation with the multi-foldable electronic device 100 unfolded, the first display portion 161, the second display portion 162 and the third display portion 163 of the flexible display 160 may be arranged substantially in parallel. For example, in the first orientation with the multi-foldable electronic device 100 unfolded, the first display portion 161, the second display portion 162 and the third display portion 163 of the flexible display 160 may be arranged to face in a first direction (e.g., the +z-axis direction).

According to an embodiment of the disclosure, the multi-foldable electronic device 100 may be sequentially unfolded by the second hinge 150 and the first hinge 140. For example, the second housing 120 and the third housing 130 may be rotated by the second hinge 150. For example, the first housing 110 and the second housing 120 may be rotated by the first hinge 140.

According to an embodiment of the disclosure, as the second housing 120 and the third housing 130 are rotated by the second hinge 150, the second display portion 162 and the third display portion 163 of the flexible display 160 may be disposed substantially in parallel. For example, the second display portion 162 and the third display portion 163 may be disposed to face in the first direction. For example, as the second housing 120 and the third housing 130 are rotated by the second hinge 150, the second display portion 162 of the flexible display 160 may move away from the third display portion 163.

According to an embodiment of the disclosure, as the first housing 110 and the second housing 120 are rotated by the first hinge 140, the first display portion 161 and the second display portion 162 of the flexible display 160 may be disposed substantially in parallel. For example, the first display portion 161 and the second display portion 162 may be disposed to face in the first direction. For example, as the first housing 110 and the second housing 120 are rotated by the first hinge 140, the first display portion 161 of the flexible display 160 may move away from the second display portion 162.

According to an embodiment of the disclosure, referring to FIG. 3, in the first orientation of the multi-foldable electronic device, all of the first display portion 161, the second display portion 162 and the third display portion 163 of the flexible display 160 may be disposed to face in the first direction.

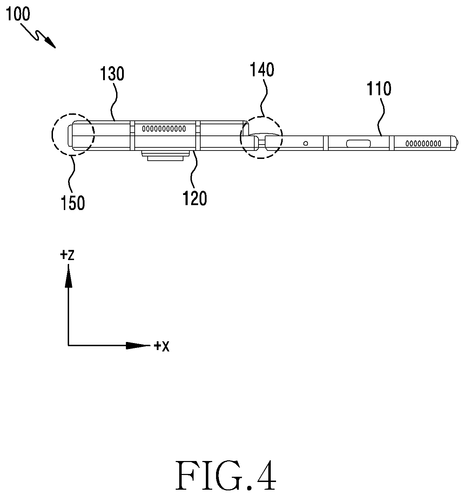

FIG. 4 is a side view of a multi-foldable electronic device in a second orientation according to an embodiment.

According to an embodiment of the disclosure, referring to FIG. 4, the second orientation of the multi-foldable electronic device 100 may include a state in which the multi-foldable electronic device 100 is folded by the second hinge 150 and unfolded by the first hinge 140. The first housing 110 and the second housing 120 may be rotated by the first hinge 140. For example, with the multi-foldable electronic device 100 folded by the second hinge 150, the second housing 120 may overlap the third housing 130. For example, as the multi-foldable electronic device 100 is folded by the second hinge 150, the third display portion 163 of the flexible display 160 may get closer to the second display portion 162. For example, with the multi-foldable electronic device 100 folded by the second hinge 150, the second display portion 162 and the third display portion 163 of the flexible display 160 may overlap. For example, the overlapping of the second display portion 162 and the third display portion 163 may include a state in which the second display portion 162 and the third display portion 163 are arranged to face each other. For example, the overlapping of the second display portion 162 and the third display portion 163 may include a state in which the third display portion 163 is disposed to face in a second direction (the -z-axis direction), and the second display portion 162 is disposed to face in the first direction.

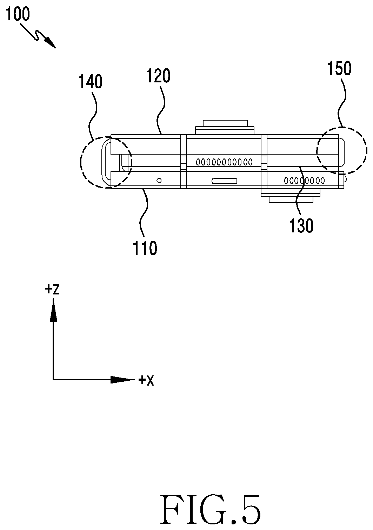

FIG. 5 is a side view of a multi-foldable electronic device in a third orientation according to an embodiment.

According to an embodiment of the disclosure, referring to FIG. 5, the third orientation of the multi-foldable electronic device 100 may include a state in which the multi-foldable electronic device 100 is folded by the first hinge 140 in the second orientation. For example, in the third orientation, the first housing 110 may be disposed to overlap the second housing 120 and the third housing 130. For example, in the third orientation, the first housing 110, the second housing 120, and the third housing 130 may be arranged to overlap each other. For example, in the third orientation, the first display portion 161 and the third display portion 163 of the flexible display 160 may be disposed to face in the first direction, and the second display portion 162 may be disposed to face in the second direction.

According to an embodiment of the disclosure, in the third orientation, the third housing 130 may be disposed between the first housing 110 and the second housing 120. In the third orientation, the third housing 130 may be disposed or received within a space formed between the first housing 110 and the second housing 120 as the multi-foldable electronic device 100 is folded by the first hinge 140. To form the space for arranging or receiving the third housing 130, a width of the first hinge 140 may be wider than a width of the second hinge 150. For example, since the width of the first hinge 140 is greater than the width of the second hinge 150, a radius of rotation of the first housing 110 or the second housing 120 by the first hinge 140 may be greater than a radius of rotation of the second housing 120 or the third housing 130 by the second hinge 150.

According to an embodiment of the disclosure, the first housing 110 may include the sub-display 170. For example, the sub-display 170 may be disposed on a side opposite to the side on which the flexible display 160 of the first housing 110 is disposed. In the third orientation of the multi-foldable electronic device 100, the sub-display 170 disposed in the first housing 110 may be disposed to face in the second direction.

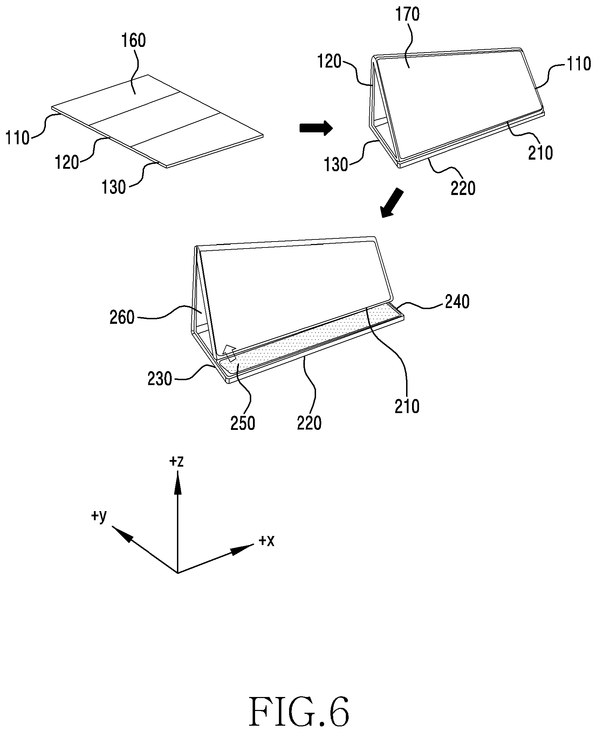

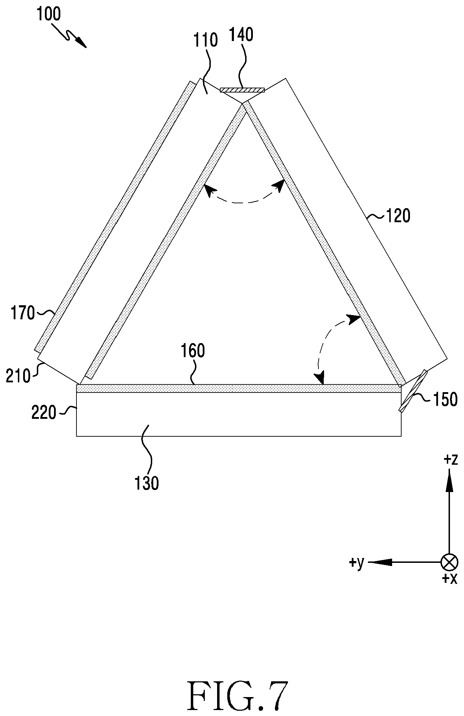

FIG. 6 is a diagram illustrating an example in which some region of a flexible display of a flexible display is exposed in a fourth orientation according to an embodiment. FIG. 7 is a side view of a multi-foldable electronic device in a fourth orientation according to an embodiment.

According to an embodiment of the disclosure, the first housing 110 may include a first side member 210. For example, the first side member 210 may be positioned around a periphery facing away from the second housing 120 in the first display portion 161. For example, the first side member 210 may be a part of the first housing 110, to configure at least a part of a side surface of the first housing 110. For example, the first side member 210 may be a separate member from the first housing 110, to form at least a part of the exterior of the first housing 110. The third housing 130 may include a second side member 220. For example, the second side member 220 may be positioned around a periphery facing away from the second housing 120 in the third display portion 163. For example, the second side member 220 may be a part of the third housing 130, to configure at least a part of a side surface of the third housing 130. For example, the second side member 220 may be a separate member from the housing 130, to form at least a part of the exterior of the third housing 130. According to an embodiment, for example, the first side member 210 through a fourth side member 240 may be referred to as a first sidewall through a fourth sidewall.

According to an embodiment of the disclosure, the third housing 130 may include the third side member 230 and the fourth side member 240. For example, the third side member 230 and the fourth side member 240 may configure side surfaces of the third housing 130 together with the second side member 220. For example, the third side member 230 and the fourth side member 240 may be a part of the third housing 130, to configure the remaining portion of the side surfaces of the third housing 130. For example, the third side member 230 and the fourth side member 240 may be separate members from the third housing 130, to form the remaining portion of the exterior of the third housing 130.

According to an embodiment of the disclosure, the third side member 230 and the fourth side member 240 may be formed substantially perpendicular to the second side member 220. For example, the third side member 230 may be formed substantially in parallel to the fourth side member 240. For example, the third side member 230 may be formed on one side of the third housing 130, and the fourth side member 240 may be formed on the other side opposite to one side of the third housing 130. For example, the second side member 220 may be formed to connect the third side member 230 and the fourth side member 240, between the third side member 230 and the fourth side member 240. For example, the second side member 220 may be formed integrally with the third side member 230 and the fourth side member 240.

According to an embodiment of the disclosure, the orientation of the multi-foldable electronic device 100 may change from one of the first orientation, the second orientation or the third orientation to the fourth orientation. For example, referring to FIG. 6 and FIG. 7, the orientation of the multi-foldable electronic device 100 may change from the first orientation to the fourth orientation in which the first side member 210 of the first housing 110 is disposed at a position adjacent to the second side member 220 of the third housing 130, as the first housing 110 and the third housing 130 are folded, with respect to the second housing 120.

According to an embodiment of the disclosure, for example, the orientation of the multi-foldable electronic device 100 may change from the second orientation in which the first housing 110 is folded with respect to the second housing 120, to the fourth orientation in which the first side member 210 of the first housing 110 is disposed at a position adjacent to the second side member 220 of the third housing 130, as the first housing 110 is unfolded and the third housing 130 is folded with respect to the second housing 120.

According to an embodiment of the disclosure, for example, the orientation of the multi-foldable electronic device 100 may change from the third orientation in which the first housing 110 and the third housing 130 are folded with respect to the second housing 120, to the fourth orientation in which the first side member 210 of the first housing 110 is disposed at a position adjacent to the second side member 220 of the third housing 130, as the first housing 110 and the third housing 130 are unfolded with respect to the second housing 120.

According to an embodiment of the disclosure, in the fourth orientation of the multi-foldable electronic device 100, the first side member 210 of the first housing 110 may be disposed at a position adjacent to the second side member 220 of the third housing 130. For example, in the fourth orientation, the first side member 210 may be disposed substantially in parallel to the second side member 220. For example, in the fourth orientation, the first side member 210 may contact at least in part the second side member 220. For example, in the fourth orientation, the first side member 210 may be disposed to be spaced apart from and adjacent to the second side member 220 by a specific distance. For example, in the fourth orientation, the first side member 210 may be disposed adjacent to the second side member 220 not to contact it by spacing a specific distance away from the second side member 220 in the +z-axis direction, or may be disposed adjacent to the second side member 220 not to contact it by spacing a specific distance away from the second side member 220 in the +y-axis direction.

According to an embodiment of the disclosure, in the fourth orientation of the multi-foldable electronic device 100, the first side member 210 of the first housing 110 may be disposed on an edge region adjacent to the second side member 220 in the entire region of the flexible display 160. According to an embodiment, in the fourth orientation, the first side member 210 may be disposed on a bezel region of the flexible display 160 adjacent to the second side member 220. For example, the bezel region may be a region formed along an edge of a front surface of the third housing 130 in the entire region of the flexible display 160. For example, the front surface of the third housing 130 may be a surface formed substantially perpendicular to the second side member 220 of the third housing 130. For example, the front surface of the third housing 130 may be a surface facing in the +z-axis. For example, the bezel region may be a region for forming the edge of the flexible display 160, and may be a region not activated by the multi-foldable electronic device 100.

According to an embodiment of the disclosure, in the fourth orientation of the multi-foldable electronic device 100, the first side member 210 of the first housing 110 may be maintained in the fourth orientation by the second side member 220 of the third housing 130. For example, the third housing 130 may include a front member facing in the +z-axis direction. For example, the front member of the third housing 130 may extend from the second side member 220. For example, the front member of the third housing 130 may be formed along an edge of the third display portion 163. For example, the front member may be a cover member of the multi-foldable electronic device 100. For example, in the fourth orientation, the multi-foldable electronic device 100 may stay in the fourth orientation, by preventing the first side member 210 from deviating by means of the front member of the third housing 130.

According to an embodiment of the disclosure, referring to FIG. 6, in the fourth orientation of the multi-foldable electronic device 100, as the first side member 210 moves away from the second side member 220, the first display region 250 may be exposed to the outside of the multi-foldable electronic device 100. For example, the first display region 250 may be a region not obscured by the first housing 110 but exposed to the outside in the third display portion 163. For example, in the fourth orientation, the first side member 210 may be moved away from the second side member 220 toward the +y-axis direction. For example, in the fourth orientation, as the first side member 210 is moved away from the second side member 220 along the third side member 230 and the fourth side member 240 on the flexible display 160, the first display region 250 may be exposed to the outside of the multi-foldable electronic device 100. For example, the first side member 210 may be moved away from the second side member 220, while contacting the third side member 230 and the fourth side member 240 on the flexible display 160. For example, the first side member 210 may be moved away from the second side member 220, while contacting the front member portion extending from the third side member 230 and the fourth side member 240. For example, as the first side member 210 is moved away from the second side member 220 with the first side member 210 spaced a specific distance away from the flexible display 160 in the +z-axis direction, the first display region 250 may be exposed to the outside of the multi-foldable electronic device 100.

According to an embodiment of the disclosure, as the first side member 210 is moved away from the second side member 220, the first display region 250 not surrounded by the first housing 110 may be exposed to the outside of the multi-foldable electronic device 100. The first display region 250 may be visually exposed to a user. The first display region 250 may be a region not obscured by the first housing 110 in the entire region of the flexible display 160. For example, the first display region 250 may be a region between the first side member 210 and the second side member 220. For example, in the fourth orientation, as the first side member 210 is moved away from the second side member 220, if the first display region 250 is exposed, the first display region 250 may be activated. For example, the multi-foldable electronic device 100 may display an application or notification information in the activated first display region 250.

According to an embodiment of the disclosure, referring to FIG. 6, the flexible display 160 may include a second display region 260. The first display region 250 may be a region which is exposed to the outside and not obscured by the first housing 110, the second housing 120, and the third housing 130 in the entire region of the flexible display 160. For example, the second display region 260 may be a region excluding the first display region 250 in the entire region of the flexible display 160. For example, the second display region 260 may be a region surrounded at least in part by the first housing 110, the second housing 120, and/or the third housing 130. For example, in the fourth orientation, as the first side member 210 is moved away from the second side member 220, the second display region 260 may remain inactive even though the first display region 250 is activated. For example, as the orientation of the multi-foldable electronic device 100 changes from the fourth orientation to the first orientation or the second orientation, the second display region 260 may be exposed to the outside of the multi-foldable electronic device 100, and change from the inactive state to the active state.

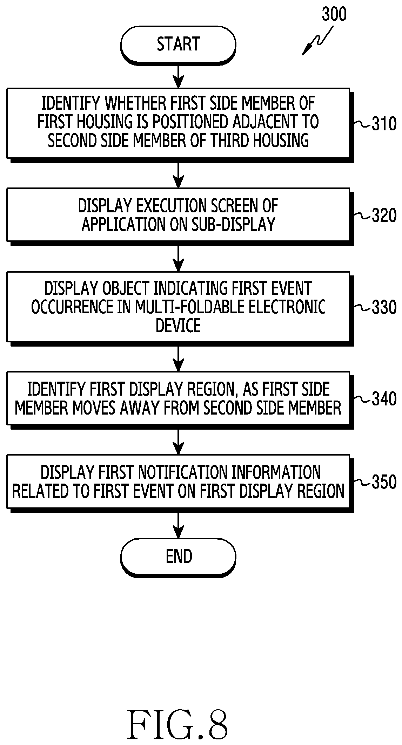

FIG. 8 is a flowchart 300 illustrating a process of a method for a multi-foldable electronic device to display first notification information in a first display region according to an embodiment.

According to an embodiment of the disclosure, referring to operation 310, the multi-foldable electronic device 100 may identify whether the first side member 210 of the first housing 110 is positioned at a position adjacent to the second side member 220 of the third housing 130, as the first housing 110 and the third housing 130 are folded with respect to the second housing 120. For example, as the first housing 110 and the third housing 130 are folded with respect to the second housing 120, if the first side member 210 of the first housing 110 is disposed at a position adjacent to the second side member 220 of the third housing 130, the multi-foldable electronic device 100 may identify the orientation of the multi-foldable electronic device 100 as the fourth orientation explained in FIG. 6 through FIG. 7.

According to an embodiment of the disclosure, the multi-foldable electronic device 100 may identify the orientation of the multi-foldable electronic device 100 as the fourth orientation using at least one sensor. For example, the multi-foldable electronic device 100 may identify the fourth orientation using a plurality of angle sensors for measuring folding angles between the first housing 110, the second housing 120, and the third housing 130. For example, some of the angle sensors may be disposed within the first hinge 140, and others may be disposed within the second hinge 150. For example, the angle sensor may be a 6-axis sensor, and the 6-axis sensor may be a sensor combining a 3-axis acceleration sensor and a 3-axis gyro sensor. For example, the multi-foldable electronic device 100 may identify the orientation of the multi-foldable electronic device 100 as the fourth orientation, based on the slope and/or the movement of the first housing 110 and the third housing 130 with respect to the second housing 120 identified using the 3-axis acceleration sensor. For example, the multi-foldable electronic device 100 may identify the orientation of the multi-foldable electronic device 100 as the fourth orientation, based on the rotation angle of the first housing 110 and the third housing 130 with respect to the second housing 120 identified using the 3-axis gyro sensor.

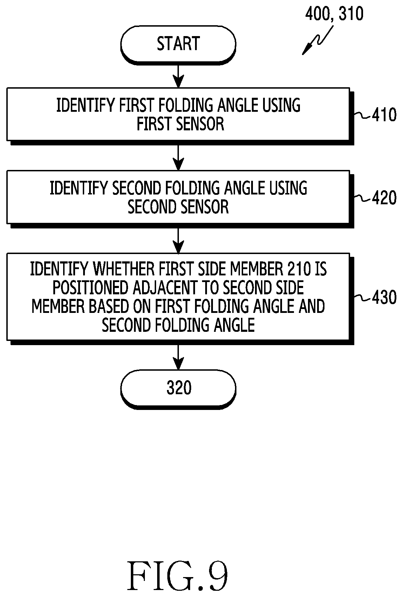

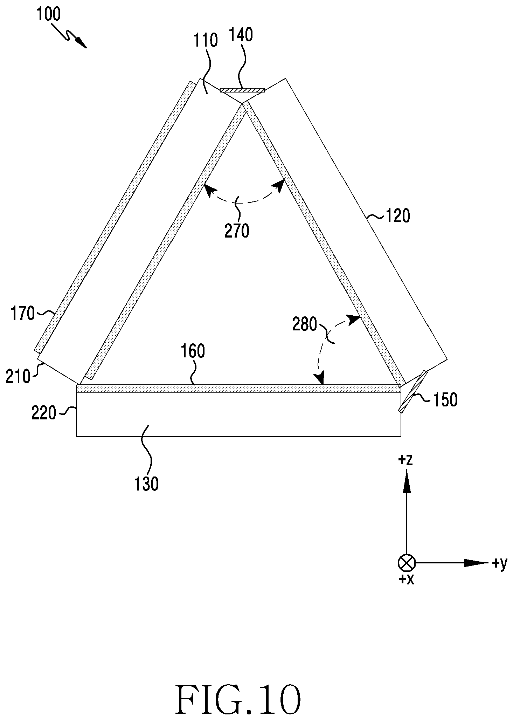

The operation of the multi-foldable electronic device 100 for identifying the orientation of the multi-foldable electronic device 100 as the fourth orientation using the angle sensors shall be described with reference to FIG. 9 and FIG. 10.

According to an embodiment of the disclosure, for example, the multi-foldable electronic device 100 may identify the orientation of the multi-foldable electronic device 100 as the fourth orientation, using a Hall sensor. For example, the multi-foldable electronic device 100 may identify the orientation of the multi-foldable electronic device 100 as the fourth orientation by detecting a change in a magnetic field around the Hall sensor using at least one Hall sensor disposed within the first housing 110 and/or the third housing 130. For example, as the first side member 210 of the first housing 110 is disposed at a position adjacent to the second side member 220 of the third housing 130, the multi-foldable electronic device 100 may identify the orientation of the multi-foldable electronic device 100 as the fourth orientation based on the change in the magnetic field detected by the at least one Hall sensor disposed within the first housing 110 and/or the third housing 130.

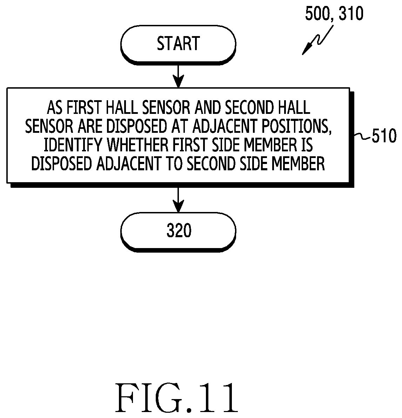

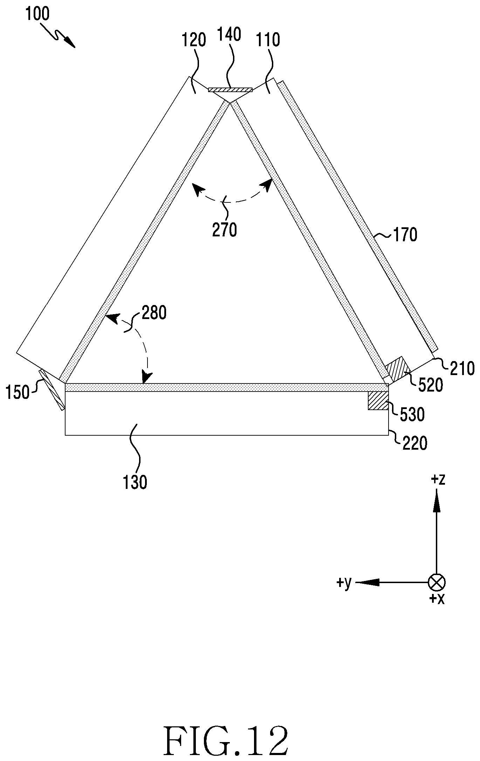

The operation of the multi-foldable electronic device 100 for identifying the orientation of the multi-foldable electronic device 100 as the fourth orientation by use of the Hall sensor shall be described with reference to FIG. 11 and FIG. 12.

According to an embodiment of the disclosure, referring to operation 320, the multi-foldable electronic device 100 may display an execution screen of an application on the sub-display 170, while the orientation of the multi-foldable electronic device 100 is the fourth orientation.

According to an embodiment of the disclosure, the flexible display 160 may be disposed on one side of the first housing 110, and the sub-display 170 may be disposed on the other side opposite to one side of the first housing 110. For example, in the third orientation and/or the fourth orientation, the user may view the application execution screen displayed on the sub-display 170. For example, in the fourth orientation, based on a user input for executing the application, the multi-foldable electronic device 100 may display the application execution screen on the sub-display 170. For example, the application may be an application for executing a video, and in the fourth orientation, the multi-foldable electronic device 100 may display, but not limited to, the application execution screen including the video on the sub-display 170.

According to an embodiment of the disclosure, the foldable electronic device 100 may display the application execution screen on the sub-display 170 in, but not limited to, the fourth orientation. For example, if the foldable electronic device 100 displays the application execution screen on the sub-display 170 in the first orientation or the third orientation and the orientation of the foldable electronic device 100 changes to the fourth orientation, the foldable electronic device 100 may maintain the application execution screen displayed on the sub-display 170.

According to an embodiment of the disclosure, in the first orientation through the third orientation, while the foldable electronic device 100 displays an application execution screen on the flexible display 160, if the orientation of the foldable electronic device 100 changes to the fourth orientation, the foldable electronic device 100 may change and display the application execution screen based on characteristics of the screen of the sub-display 170, on the sub-display 170. For example, the foldable electronic device 100 may change the characteristics of the application execution screen displayed on the flexible display 160 based on a size and/or a resolution of the screen of the sub-display 170, and display the changed application execution screen on the screen of the sub-display 170.

According to an embodiment of the disclosure, referring to operation 330, while the orientation of the multi-foldable electronic device is the fourth orientation, an object indicating occurrence of a first event in the multi-foldable electronic device 100 may be displayed on the sub-display 170.

According to an embodiment of the disclosure, the first event occurring in the multi-foldable electronic device 100 may be, for example, an event related to the orientation of the multi-foldable electronic device 100. For example, the first event may be an event related to remaining battery information of the multi-foldable electronic device 100. For example, if the remaining battery of the multi-foldable electronic device 100 is below a threshold value, the multi-foldable electronic device 100 may identify the first event occurrence. For example, the first event may be an event related to network connectivity of the multi-foldable electronic device 100. For example, the multi-foldable electronic device 100 is connected to an external electronic device using wireless communication, or the multi-foldable electronic device 100 is connected to WiFi, the multi-foldable electronic device 100 may identify the first event occurrence. For example, the first event may be an event related to display information on the multi-foldable electronic device 100. For example, if brightness of the sub-display 170 exceeds a threshold value, the multi-foldable electronic device 100 may identify the first event occurrence.

According to an embodiment of the disclosure, the first event occurring in the multi-foldable electronic device 100 may be, for example, an event related to an application running on the multi-foldable electronic device 100. For example, if the application running on the multi-foldable electronic device 100 is a message application, and a message is received at the multi-foldable electronic device 100, the multi-foldable electronic device 100 may identify the first event occurrence. For example, if the application running on the multi-foldable electronic device 100 is a financial application, and a financial-related transaction such as money deposit/withdrawal occurs, the multi-foldable electronic device 100 may identify the first event has occurrence.

According to an embodiment of the disclosure, the multi-foldable electronic device 100 may display an object related to the first event on the sub-display 170 based on identifying the first event occurrence. According to an embodiment, the object may include a graphical user interface (GUI) including at least one of information indicating the first event occurrence, information describing the first event or contents of the first event. For example, if the first event that the remaining battery falls below the threshold value occurs, the multi-foldable electronic device 100 may display a GUI indicating the low remaining battery on the sub-display 170. For example, if receiving a message in the message application, the multi-foldable electronic device 100 may display a text indicating the incoming message on the sub-display 170.

According to an embodiment of the disclosure, the multi-foldable electronic device 100 may display an object on the application execution screen being displayed on the sub-display 170. For example, the multi-foldable electronic device 100 may display an object around, but not limited to, the edge of the application execution screen displayed on the sub-display 170.

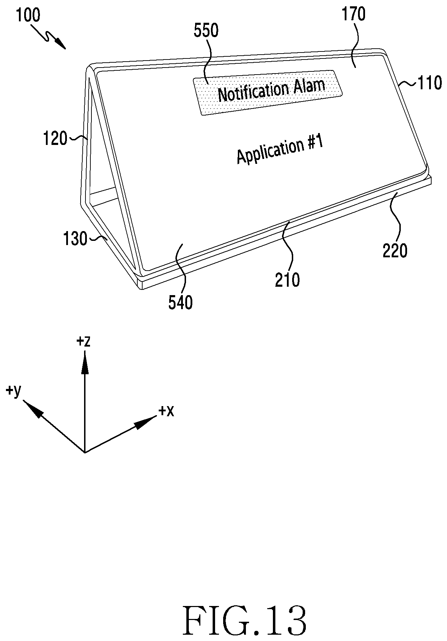

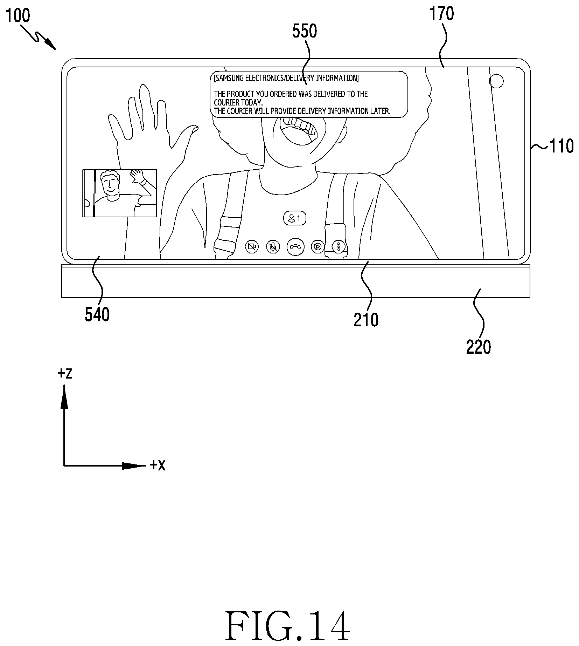

An example of the object related to the first event shall be described in FIG. 13 and FIG. 14.

According to an embodiment of the disclosure, referring to operation 340, the multi-foldable electronic device 100 may identify the first display region 250, as the first side member 210 moves away from the second side member 220.

According to an embodiment of the disclosure, the multi-foldable electronic device 100 may identify using at least one sensor that the first side member 210 is moved away from the second side member 220. For example, the angle sensor may be used to identify that the folding angle between the first housing 110 and the second housing 120 and the folding angle between the second housing 120 and the third housing 130 are changed in the fourth orientation. Based on the changed folding angles, the multi-foldable electronic device 100 may identify that the first side member 210 is moved away from the second side member 220.

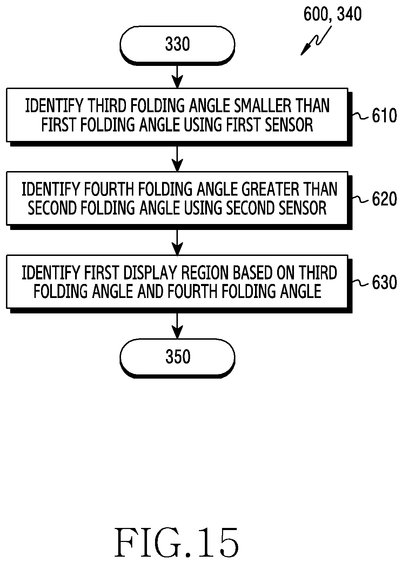

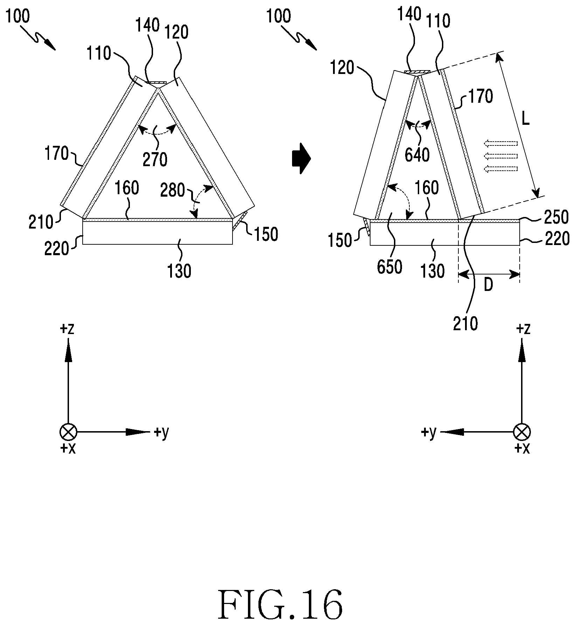

The operation in which the multi-foldable electronic device 100 identifies that the first side member 210 is moved away from the second side member 220 using the angle sensor shall be described with reference to FIG. 15 and FIG. 16.

According to an embodiment of the disclosure, the multi-foldable electronic device 100 may identify using the Hall sensor that the first side member 210 is moved away from the second side member 220. For example, as the first side member 210 is moved away from the second side member 220, the strength of the magnetic field detected by the Hall sensor in the first housing 110 and the Hall sensor in the third housing 130 may change. Based on the changed magnetic field strength, the multi-foldable electronic device 100 may identify that the first side member 210 is moved away from the second side member 220.

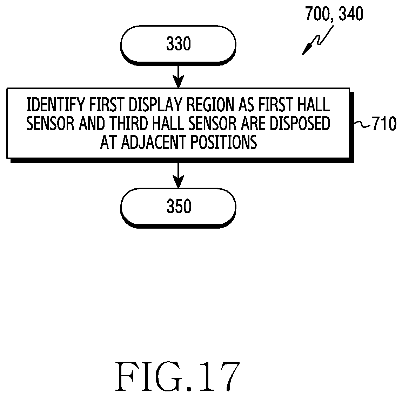

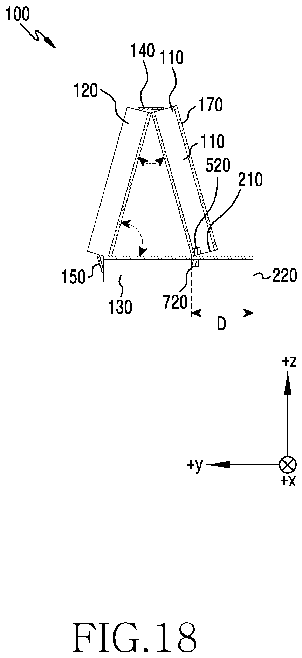

The operation in which the multi-foldable electronic device 100 identifies using the Hall sensor that the first side member 210 is moved away from the second side member 220 shall be described with reference to FIG. 17 and FIG. 18.

According to an embodiment of the disclosure, referring to operation 350, the multi-foldable electronic device 100 may display first notification information related to the first event on the first display region 250.

According to an embodiment of the disclosure, as the first side member 210 is moved away from the second side member 220, the multi-foldable electronic device 100 may display the first notification information on the first display region 250 between the first side member 210 and the second side member 220. For example, as the first side member 210 is moved away from the second side member 220, the multi-foldable electronic device 100 may display the first notification information on the activated first display region. According to an embodiment, the first notification information may include information related to the first event, and contain more information than the information displayed on the object.

According to an embodiment of the disclosure, the first notification information may be information related to the first event. For example, if the first event is an event related to orientation information of the multi-foldable electronic device 100, the first notification information may be information describing the orientation of the multi-foldable electronic device 100. For example, if the remaining battery of the multi-foldable electronic device 100 is below a threshold value, the first notification information may be information including a text of "The battery of the electronic device is below 15% and needs to be charged immediately". For example, if the first event is an event related to an application running on the multi-foldable electronic device 100, the first notification information may be information indicating the orientation of the application. For example, if the running application is a messaging application, and a message is received in the application, the first notification information may be information including content of the message.

According to an embodiment of the disclosure, while the user touches the object, as the first side member 210 moves away from the second side member 220, the multi-foldable electronic device 100 may display the first notification information on the first display region 250 between the first side member 210 and the second side member 220. According to an embodiment, as the first side member 210 is moved away from the second side member 220 while the object is displayed on the sub-display 170, the multi-foldable electronic device 100 may display the first notification information on the first display region 250 between the first side member 210 and the second side member 220.

According to an embodiment of the disclosure, if a designated time passes after the object is displayed on the sub-display 170, the object may disappear from the sub-display 170. For example, if the first side member 210 is not moved away from the second side member 220 during the designated time while the object is displayed on the sub-display 170, the object may disappear from the sub-display 170.

According to an embodiment of the disclosure, as the first notification information is displayed on the first display region 250, the user may view content related to the first event on the first display region 250 without interrupting the application execution screen displayed on the sub-display 170.

The first notification information is not limited to the text, and may be information including a figure and/or an animation.

FIG. 9 is a flowchart 400 illustrating a process of a method for a multi-foldable electronic device to identify whether a first side member of a first housing is disposed at a position adjacent to a second side member of a third housing using a first sensor and a second sensor according to an embodiment. FIG. 10 is a diagram illustrating a first folding angle between a first housing and a second housing and a second folding angle between a second housing and a third housing according to an embodiment.

According to an embodiment of the disclosure, for example, operation 410 through operation 430 may be operations included in operation 310 of FIG. 8, or may be operations performed in parallel with operation 310. For example, the first sensor and the second sensor of FIG. 9 to be described may correspond to the 6-axis sensor of FIG. 8.

According to an embodiment of the disclosure, referring to operation 410 and FIG. 10, the multi-foldable electronic device 100 may identify a first folding angle 270 using the first sensor.

According to an embodiment of the disclosure, the first sensor may be disposed within the first hinge 140. For example, while the first housing 110 is rotated by the first hinge 140 with respect to the second housing 120, the multi-foldable electronic device 100 may measure an acceleration change of the first housing 110 using the first sensor, and determine a movement and/or a slope of the first housing 110 with respect to the second housing 120 based on the measured acceleration change. For example, based on the movement and/or the slope of the first housing 110 with respect to the second housing 120, the multi-foldable electronic device 100 may identify the first folding angle 270 between the first housing 110 and the second housing 120.

According to an embodiment of the disclosure, for example, while the first housing 110 is rotated by the first hinge 140 with respect to the second housing 120, the multi-foldable electronic device 100 may obtain rotation information of the first housing 110 with respect to the second housing 120 using the first sensor. Based on the obtained rotation information, the multi-foldable electronic device 100 may identify the first folding angle 270 between the first housing 110 and the second housing 120. For example, the rotation information may include information related to a rotation direction of the first housing 110 rotated with respect to the second housing 120 and a rotation angle of the first housing 110 with respect to the second housing 120.

According to an embodiment of the disclosure, referring to operation 420 and FIG. 10, the multi-foldable electronic device 100 may identify a second folding angle 280 using the second sensor.

According to an embodiment of the disclosure, the second sensor may be disposed within the second hinge 150. For example, while the third housing 130 is rotated by the second hinge 150 with respect to the second housing 120, the multi-foldable electronic device 100 may measure an acceleration change of the third housing 130 using the second sensor, and determine a movement and/or a slope of the third housing 130 with respect to the second housing 120 based on the measured acceleration change. For example, based on the movement and/or the slope of the third housing 130 with respect to the second housing 120, the multi-foldable electronic device 100 may identify the second folding angle 280 between the third housing 130 and the second housing 120.

According to an embodiment of the disclosure, for example, while the third housing 130 is rotated by the second hinge 150 with respect to the second housing 120, the multi-foldable electronic device 100 may obtain rotation information of the third housing 130 with respect to the second housing 120 using the second sensor. Based on the obtained rotation information, the multi-foldable electronic device 100 may identify the second folding angle 280 between the third housing 130 and the second housing 120. For example, the rotation information may include information relating to a rotation direction of the third housing 130 with respect to the second housing 120 and a rotation angle of the third housing 130 with respect to the second housing 120.

According to an embodiment of the disclosure, referring to operation 430 and FIG. 10, the multi-foldable electronic device 100 may identify whether the first side member 210 is positioned at a position adjacent to the second side member 220 based on the first folding angle 270 and the second folding angle 280.

According to an embodiment of the disclosure, for example, if the first folding angle 270 and the second folding angle 280 identified each fall within a specific range, the multi-foldable electronic device 100 may identify whether the first side member 210 is disposed at a position adjacent to the second side member 220. For example, if the first folding angle 270 and the second folding angle 280 each are 60 degrees, the multi-foldable electronic device 100 may identify that the first side member 210 contacts the second side member 220 at least in part or contacts a region adjacent to the second side member 220 in the entire region of the flexible display 160.

According to an embodiment of the disclosure, for example, if the first folding angle 270 and the second folding angle 280 identified each are greater than the specific range, the multi-foldable electronic device 100 may identify the orientation of the multi-foldable electronic device 100 as the first orientation. For example, if the identified first folding angle 270 is greater than the specific range and the second folding angle 280 is smaller than the specific range, the multi-foldable electronic device 100 may identify the orientation of the multi-foldable electronic device 100 as the second orientation. For example, if each of the first folding angle 270 and the second folding angle 280 identified is smaller than the specific range, the multi-foldable electronic device 100 may identify the orientation of the multi-foldable electronic device 100 as the third orientation.

FIG. 11 is a flowchart 500 illustrating a process of a method for a multi-foldable electronic device to identify whether a first side member of a first housing is disposed at a position adjacent to a second side member of a third housing using a first Hall sensor and a second Hall sensor according to an embodiment. FIG. 12 is a diagram illustrating an arrangement of a first Hall sensor of a first housing and a second Hall sensor of a third housing according to an embodiment.

According to an embodiment of the disclosure, for example, operation 510 may be an operation included in operation 310 of FIG. 8, or may be an operation performed in parallel with operation 310. For example, a first Hall sensor 520 and a second Hall sensor 530 of FIG. 11 to be described may correspond to the Hall sensors of FIG. 8.

According to an embodiment of the disclosure, referring to operation 510 and FIG. 12, since the first Hall sensor 520 and the second Hall sensor 530 are disposed at positions adjacent to each other, the multi-foldable electronic device 100 may identify whether the first side member 210 is disposed adjacent to the second side member 220.

According to an embodiment of the disclosure, referring to FIG. 12, the first Hall sensor 520 may be disposed within the first housing 110. For example, the first Hall sensor 520 may be disposed on an edge of the first housing 110. For example, the first Hall sensor 520 may be disposed within the first housing 110 to be adjacent to the first side member 210. In an embodiment, referring to FIG. 12, the second Hall sensor 530 may be disposed within the third housing 130. For example, the second Hall sensor 530 may be disposed on an edge of the third housing 130. For example, the second Hall sensor 530 may be disposed within the third housing 130 to be adjacent to the second side member 220. For example, in the fourth orientation, the first Hall sensor 520 and the second Hall sensor 530 may be disposed adjacent to each other.

According to an embodiment of the disclosure, the first housing 110 may include a first magnet. For example, the first magnet may be disposed at a position allowing the second Hall sensor 530 to detect a change in the magnetic field caused by the first magnet in the fourth orientation. According to an embodiment, the third housing 130 may include a second magnet. For example, the second magnet may be disposed at a position allowing the first Hall sensor 520 to detect a change in the magnetic field caused by the second magnet in the fourth orientation.

According to an embodiment of the disclosure, the multi-foldable electronic device 100 may identify whether the first side member 210 is disposed at a position adjacent to the second side member 220, based on the change in the magnetic field strength detected by the first Hall sensor 520 and/or the second Hall sensor 530. For example, as the first side member 210 is moved to a position adjacent to the second side member 220, a distance between the first Hall sensor 520 and the second magnet may decrease, and the magnetic field strength detected by the first Hall sensor 520 may increase as the distance between the first Hall sensor 520 and the second magnet decreases. For example, as the first side member 210 is moved to a position adjacent to the second side member 220, the distance between the second Hall sensor 530 and the first magnet may decrease, and the strength of the magnetic field detected by the second Hall sensor 530 may increase as the distance between the second Hall sensor 530 and the first magnet decreases. For example, if the change in the magnetic field strength detected by each of the first Hall sensor 520 and the second Hall sensor 530 is within a specific range, the multi-foldable electronic device 100 may identify that the first side member 210 is disposed at a position adjacent to the second side member 220.

According to an embodiment of the disclosure, the second Hall sensor 530 may be omitted and the second magnet may be disposed at the position of the second Hall sensor 530, and the first Hall sensor 520 may be omitted and the first magnet may be disposed at the position of the first Hall sensor 520.

FIG. 13 is a diagram illustrating an object displayed on a sub-display according to an embodiment. FIG. 14 is a diagram illustrating an object displayed on a sub-display according to an embodiment.

According to an embodiment of the disclosure, in the fourth orientation of the multi-foldable electronic device 100, if a first event occurs in the multi-foldable electronic device 100, an object 550 may be displayed on the sub-display 170. For example, referring to FIG. 13, while an application execution screen 540 is displayed on the sub-display 170, if the first event occurs in the multi-foldable electronic device 100, the object 550 related to the first event may be overlappingly displayed on the application execution screen 540. For example, the object 550 may be displayed on an edge of the application execution screen 540 not to obscure the application execution screen 540, but is not limited thereto.

According to an embodiment of the disclosure, referring to FIG. 14, in the fourth orientation of the multi-foldable electronic device 100, while the application for playing a video on the sub-display 170 is displayed on the application execution screen 540, if the multi-foldable electronic device 100 identifies the occurrence of the first event, the multi-foldable electronic device 100 may display the object 550 related to the first event on the edge of the application execution screen 540. For example, referring to FIG. 14, the object 550 indicating the occurrence of the first event may be displayed on the edge of the application execution screen 540 in the form of a pop-up window. For example, the object 550 in the form of the pop-up window may include text information describing the content of the first event, but the object 550 may be displayed on the application execution screen 540 in the form of at least one of a symbol, characters, or an animation allowing the user of the multi-foldable electronic device 100 to easily recognize the occurrence, the content, or the description of the first event.

FIG. 15 is a flowchart 600 illustrating a process of a method for a multi-foldable electronic device to identify a first display region using a first sensor and a second sensor according to an embodiment. FIG. 16 is a diagram illustrating an example in which a multi-foldable electronic device identifies a first display region using a first sensor and a second sensor according to an embodiment.

According to an embodiment of the disclosure, operations 610 through 630 of FIG. 15 may be performed in parallel with operation 340, or may be operations included in operation 340.

According to an embodiment of the disclosure, referring to operation 610, the multi-foldable electronic device 100 may identify a third folding angle 640 smaller than the first folding angle 270 using the first sensor.

According to an embodiment of the disclosure, in the fourth orientation of the multi-foldable electronic device 100, as the first side member 210 is moved away from the second side member 220, the multi-foldable electronic device 100 may identify a third folding angle 640 smaller than the first folding angle 270 using the first sensor. For example, in the fourth orientation, as the first side member 210 is moved away from the second side member 220, the multi-foldable electronic device 100 may obtain information of the movement of the first housing 110 toward the second housing 120, the slope of the first housing 110 with respect to the third housing 130, and/or the rotation of the first housing 110 with respect to the second housing 120 by use of the first sensor. The multi-foldable electronic device 100 may identify the third folding angle 640 between the first housing 110 and the second housing 120 based on the obtain information of the movement of the first housing 110 toward the second housing 120, the slope of the first housing 110 with respect to the third housing 130, and/or the rotation of the first housing 110 with respect to the second housing 120.

According to an embodiment of the disclosure, referring to operation 620, the multi-foldable electronic device 100 may identify a fourth folding angle 650 which is greater than the second folding angle 280 by use of the second sensor.

According to an embodiment of the disclosure, in the fourth orientation of the multi-foldable electronic device 100, as the first side member 210 is moved away from the second side member 220, the multi-foldable electronic device 100 may identify the fourth folding angle 650 greater than the second folding angle 280 using the second sensor. For example, in the fourth orientation, as the first side member 210 is moved away from the second side member 220, the multi-foldable electronic device 100 may obtain information of the movement of the second housing 120 in an opposite direction of the first housing 110, the slope of the second housing 120 with respect to the third housing 130, and/or the rotation of the second housing 120 with respect to the first housing 110 by using the second sensor. The multi-foldable electronic device 100 may identify the fourth folding angle 650 between the second housing 120 and the third housing 130 based on the obtained information of the movement of the second housing 120 in the opposite direction of the first housing 110, the slope of the second housing 120 with respect to the third housing 130, and/or the rotation of the second housing 120 with respect to the first housing 110.

According to an embodiment of the disclosure, referring to operation 630, the multi-foldable electronic device 100 may identify the first display region 250 based on the third folding angle 640 and the fourth folding angle 650.

According to an embodiment of the disclosure, referring to FIG. 16, the multi-foldable electronic device 100 may measure a distance D between the second side member 220 and the first side member 210, based on the third folding angle 640 and/or the fourth folding angle 650 identified. For example, if the length of the first housing 110 and/or the second housing 120 is defined as L, the third folding angle 640 is defined as $\theta_1$, and the distance between the first side member 210 and the second side member 220 is defined as D, the distance D between the first side member 210 and the second side member 220 may be determined by Equation 1 as below.

$$[\text{Equation 1}]$$

$$D= Lsin\frac{\theta_1}{2}$$

According to an embodiment of the disclosure, for example, referring to FIG. 16, if the length of the first housing 110 and/or the second housing 120 is defined as L, the fourth folding angle 650 is defined as $\theta_2$, and the distance between the first side member 210 and the second side member 220 is defined as D, the distance D between the first side member 210 and the second side member 220 may be determined by Equation 2 as below.

$$[\text{Equation 2}]$$

$$D= 2Lcos\theta_2$$

According to an embodiment of the disclosure, the size of the first display region 250 may be determined based on the distance D between the first side member 210 and the second side member 220 determined by Equation 1 and/or Equation 2. For example, an area of the first display region 250 may be measured by multiplying the distance D between the first side member 210 and the second side member 220 by the length of the second side member 220. Based on the identified size of the first display region 250, the multi-foldable electronic device 100 may determine first notification information to display on the first display region 250. For example, based on the identified size of the identified first display region 250, at least one of an amount, a type, and a display order of data constructing the first notification information to be displayed may be determined.

FIG. 17 is a flowchart 700 illustrating a process of a method for a multi-foldable electronic device to identify a first display region using a first Hall sensor and a third Hall sensor according to an embodiment. FIG. 18 is a diagram illustrating an example in which a multi-foldable electronic device identifies a first display region using a first Hall sensor and a third Hall sensor according to an embodiment.

According to an embodiment of the disclosure, operation 710 may be performed in parallel with operation 340, or may be an operation included in operation 340.

According to an embodiment of the disclosure, referring to operation 710, the multi-foldable electronic device 100 may identify the first display region 250 exposed to the outside, as the first Hall sensor 520 and the third Hall sensor 720 are disposed at positions adjacent to each other. For example, referring to FIG. 18, the third Hall sensor 720 may be disposed within the third housing 130 by spacing a specific distance away from the second side member 220 in the +y-axis direction. For example, the third Hall sensor 720 may be disposed within the third housing 130 by spacing a specific distance away from the second side member 220 in the extension direction of the third side member 230.

According to an embodiment of the disclosure, in the fourth orientation, as the first side member 210 is moved away from the second side member 220, the change in the magnetic field may be detected using the first Hall sensor 520 of the first housing 110 and the third Hall sensor 720 of the third housing 130. For example, the first housing 110 may include the first magnet, and the third housing 130 may include a third magnet. For example, the first magnet may be disposed at a position allowing the third Hall sensor 720 to detect the change of the magnetic field formed by the first magnet, as the first side member 210 is moved away from the second side member 220. For example, the third magnet may be disposed at a position allowing the first Hall sensor 520 to detect the change in the magnetic field formed by the third magnet, as the first side member 210 is moved away from the second side member 220. For example, the first magnet may be disposed at a position adjacent to the first Hall sensor 520, and the third magnet may be disposed at a position adjacent to the third Hall sensor 720.

For example, in the fourth orientation, as the first side member 210 is moved away from the second side member 220, the first Hall sensor 520 of the first housing 110 may get closer to the third Hall sensor 720 of the third housing 130. For example, as the first Hall sensor 520 gets closer to the third Hall sensor 720, the strength of the magnetic field of the third magnet detected by the first Hall sensor 520 may increase, and the strength of the magnetic field of the first magnet detected by the third Hall sensor 720 may increase.

According to an embodiment of the disclosure, referring to FIG. 18, using the change in the magnetic field detected by the third Hall sensor 720 and the first Hall sensor 520 disposed apart from the second side member 220 by a specified distance D, the multi-foldable electronic device 100 may identify the position of the first side member 210 with respect to the second side member 220. The multi-foldable electronic device 100 may identify the first display region 250 based on the identified position of the first side member 210. The multi-foldable electronic device 100 may display the first notification information based on the size of the identified first display region 250.

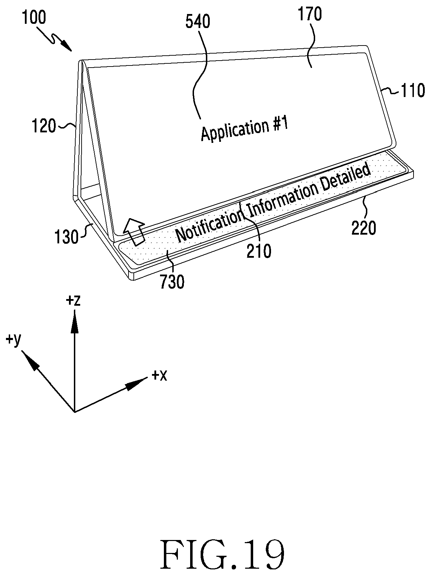

FIG. 19 is a diagram in which a multi-foldable electronic device displays first notification information on a first display region according to an embodiment.

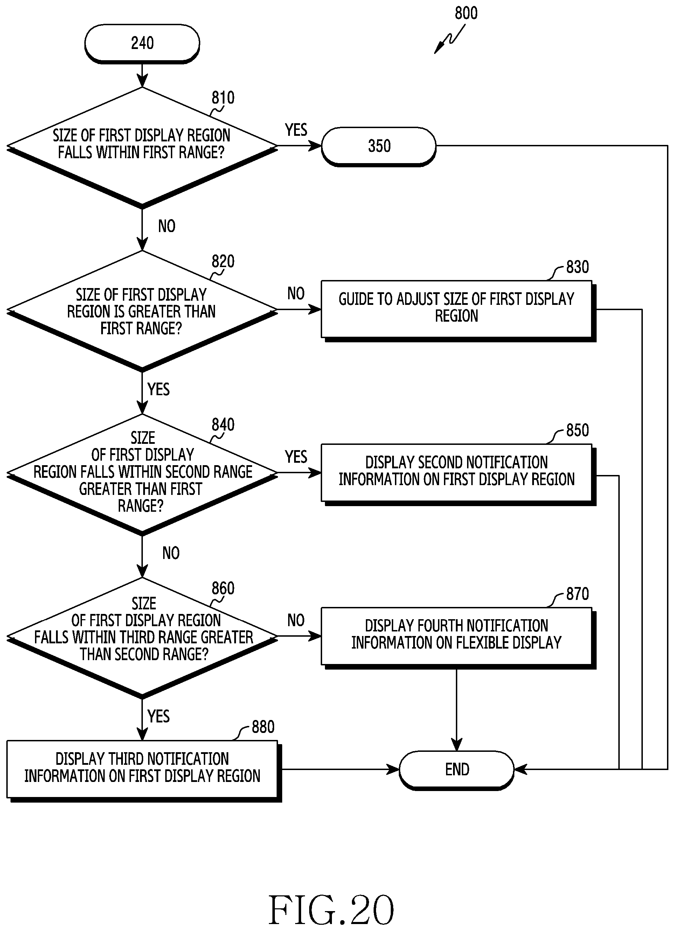

According to an embodiment of the disclosure, in the fourth orientation, as the first side member 210 is moved away from the second side member 220, the multi-foldable electronic device 100 may display first notification information 730 on the first display region 250. For example, the first display region 250 between the first side member 210 and the second side member 220 may be activated after the first side member 210 is moved away from the second side member 220, and the first notification information 730 may be displayed on the activated first display region 250. Since the multi-foldable electronic device 100 displays the first notification information 730 on the first display region 250 while executing the application on the application execution screen 540 on the sub-display 170, the user may identify the first notification information 730 without interrupting the application execution screen. According to an embodiment, the first notification information 730 to be displayed may change, depending on the size of the first display region 250 exposed to the outside. The type of the first notification information 730 based on the size of the first display region 250 shall be described in FIG. 20.

FIG. 20 is a flowchart 800 illustrating a process of a method for determining notification information to be displayed based on a size of a first display region according to an embodiment.

According to an embodiment of the disclosure, referring to operation 810, the multi-foldable electronic device 100 may identify whether the size of the first display region 250 falls within a first range.

According to an embodiment of the disclosure, if the multi-foldable electronic device 100 determines that the size of the first display region 250 falls within the first range in operation 810, the multi-foldable electronic device 100 may display the first notification information 730 on the first display region 250 according to operation 350. For example, the first notification information 730 displayed on the first display region 250 according to operation 350 may be partial information of the information related to the first event. According to an embodiment, if the multi-foldable electronic device 100 determines that the size of the first display region 250 exceeds the first range in operation 810, the multi-foldable electronic device 100 may perform operation 820.

According to an embodiment of the disclosure, referring to operation 820, the multi-foldable electronic device 100 may identify whether the size of the first display region 250 is greater than the first range.

According to an embodiment of the disclosure, the multi-foldable electronic device 100 may perform operation 840 if the size of the first display region 250 is greater than the first range, and perform operation 830 if the size of the first display region 250 is smaller than the first range.

According to an embodiment of the disclosure, referring to operation 830, the multi-foldable electronic device 100 may perform an operation for guiding to adjust the size of the first display region 250.

According to an embodiment of the disclosure, if the size of the first display region 250 is smaller than the first range, the area of the first display region 250 for the multi-foldable electronic device 100 to display the first notification information 730 may be insufficient. Hence, the multi-foldable electronic device 100 may perform operations for guiding the user to adjust the size of the first display region 250 to display the first notification information 730.

According to an embodiment of the disclosure, for example, the multi-foldable electronic device 100 may emit light in at least a part of the first display region 250. For example, the multi-foldable electronic device 100 may illuminate the edge of the first display region 250. For example, the multi-foldable electronic device 100 may illuminate the bezel region of the first display region 250. After visually identifying the light emitted on the first display region 250, the user may move the first side member 210 away from the second side member 220, to increase the size of the first display region 250.

According to an embodiment of the disclosure, the multi-foldable electronic device 100 may emit light in at least a part of the portion excluding the first display region 250 of the third display portion 163 to guide the resizing of the first display region 250. For example, after visually identifying the light emitted in at least a part of the portion excluding the first display region 250 in the third display portion 163, the user may move the first side member 210 away from the second side member 220, to increase the size of the first display region 250.

According to an embodiment of the disclosure, for example, the multi-foldable electronic device 100 may display on the sub-display 170 a UI for guiding the user to resize the first display region 250. For example, the multi-foldable electronic device 100 may display on the sub-display 170 the UI explaining an action to move the first side member 210 away from the second side member 220. For example, according to the UI displayed on the sub-display 170, the user may move the first side member 210 away from the second side member 220.

According to an embodiment of the disclosure, after the first display region 250 is resized in operation 830, the multi-foldable electronic device 100 may display the first notification information 730 on the first display region 250. The operations for guiding to resize the first display region 250 are not limited to the examples described in operation 830.

According to an embodiment of the disclosure, referring to operation 840, the multi-foldable electronic device 100 may identify whether the size of the first display region 250 falls within a second range which is greater than the first range.

According to an embodiment of the disclosure, the multi-foldable electronic device 100 may perform operation 850, if the size of the first display region 250 falls within the second range greater than the first range, and perform operation 860, if the size of the first display region 250 exceeds the second range, in operation 840.

According to an embodiment of the disclosure, referring to operation 850, the multi-foldable electronic device 100 may display second notification information on the first display region 250.

According to an embodiment of the disclosure, the multi-foldable electronic device 100 may display the second notification information containing more data than the first notification information 730 on the first display region 250 in the second range. For example, the first notification information 730 may be partial information of the information related to the first event, and the second notification information may be whole information related to the first event. For example, if the first event is an event that the multi-foldable electronic device 100 receives a message in a message application, the first notification information 730 may be a part of the message, and the second notification information may be the whole message. For example, if the first event occurs according to the remaining battery of the multi-foldable electronic device 100 falling below the threshold value, the first notification information may indicate the remaining battery value, and the second notification information may further include information relating to the remaining battery value and battery usage history.

According to an embodiment of the disclosure, referring to operation 860, the multi-foldable electronic device 100 may identify whether the size of the first display region 250 falls within a third range which is greater than the second range.

According to an embodiment of the disclosure, in operation 860, the multi-foldable electronic device 100 may perform operation 880 if the size of the first display region 250 falls within the third range greater than the second range, and perform operation 870 if the size of the first display region 250 exceeds the third range.

According to an embodiment of the disclosure, referring to operation 870, the multi-foldable electronic device 100 may display fourth notification information on the flexible display 160.

According to an embodiment of the disclosure, if the size of the first display region 250 exceeds the third range, the multi-foldable electronic device 100 may display on the first display region 250 the fourth notification information containing more data than the third notification information to be described in operation 880. The fourth notification information may include information related to the first event and the application execution screen 540. For example, the multi-foldable electronic device 100 may display the application execution screen 540 displayed on the sub-display 170 together with the first notification information 730 related to the first event on the first display region 250 exceeding the third range.

According to an embodiment, for example, if the size of the first display region 250 exceeds the third range, the multi-foldable electronic device 100 may display on the first display region 250 the application execution screen 540 displayed on the sub-display 170, and display on the sub-display 170 the first notification information 730 displayed on the first display region 250. According to an embodiment, if the orientation of the multi-foldable electronic device 100 changes from the fourth orientation to the first orientation, the multi-foldable electronic device 100 may display both the application execution screen 540 and the whole information related to the first event on the flexible display 160.

According to an embodiment of the disclosure, as the size of the first display region 250 gradually increases, the amount of the data contained in the first notification information 730 displayed on the first display region 250 may increase.

According to an embodiment of the disclosure, referring to operation 880, the multi-foldable electronic device 100 may display the third notification information on the first display region 250.

According to an embodiment of the disclosure, if the size of the first display region 250 falls within the third range, the multi-foldable electronic device 100 may display on the first display region 250 the third notification information containing more data than the second notification information. For example, the third notification information may include information related to a second event which is different from the first event. For example, the second event may be an event occurring before the occurrence of the first event. For example, the second event may be an event occurring before displaying the first notification information 730 related to the first event on the first display region 250 after the occurrence of the first event.

According to an embodiment of the disclosure, the multi-foldable electronic device 100 may display on the first display region 250 within the third range the third notification information including the information related to the first event and the information related to the second event. For example, the first display region 250 may be divided into a plurality of layouts, and the information related to the first event and the information related to the second event may be displayed within different layouts. For example, the information related to the first event and the information related to the second event may be displayed in chronological order of the event occurrence. For example, the information related to the first event which occurs first may be displayed in a region further away from the second side member 220 than the information related to the second event which occurs later in the first display region 250.

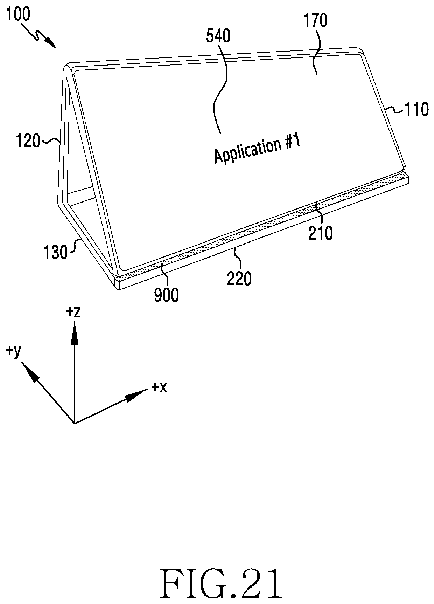

FIG. 21 is a diagram illustrating an example in which a multi-foldable electronic device emits light in at least a part of a first display region in a range where a size of the first display region is smaller than a first range according to an embodiment.

Referring to FIG. 21, if the multi-foldable electronic device 100 is in the fourth orientation and the size of the first display region 250 is smaller than the first range, the multi-foldable electronic device 100 may emit light on a light emitting region 900 to guide the size adjustment of the first display region 250. For example, the light emitting region 900 may be at least a part of the region between the first side member 210 and the second side member 220 in the whole region of the flexible display 160. For example, in the fourth orientation, the light emitting region 900 may be a region adjacent to the second side member 220 of the edge region of the flexible display 160. For example, the light emitting region 900 may be, in the fourth orientation, the bezel region of the flexible display 160 between the first side member 210 and the second side member 220.

According to an embodiment of the disclosure, the user may identify the light emitted from the light emitting region 900, and move the first housing 110 to make the first side member 210 away from the second side member 220, in the fourth orientation of the multi-foldable electronic device 100.

According to an embodiment of the disclosure, in the fourth orientation, the foldable electronic device 100 may determine characteristics of the light emitted in the light emitting region 900 based on an event related to the application and/or an event occurring in the electronic device. For example, in the fourth orientation, the foldable electronic device 100 may determine the characteristics including a color and/or a light emitting effect of the light emitted in the light emitting region 900 based on the event. For example, if there occurs an event that the battery of the foldable electronic device 100 falls below a threshold, the foldable electronic device 100 may emit red light in the light emitting region 900. For example, if there occurs an event that a message application receives an emergency alerts message, the foldable electronic device 100 may emit light including a flickering effect in the light emitting region 900.

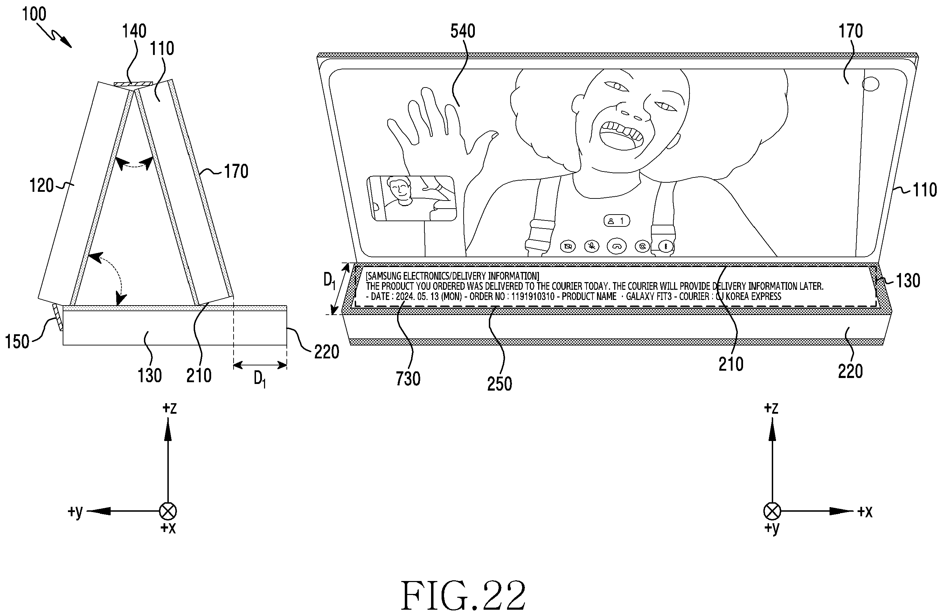

FIG. 22 is a diagram illustrating an example in which a multi-foldable electronic device displays first notification information on a first display region, if a size of the first display region falls within a first range according to an embodiment.

According to an embodiment of the disclosure, referring to FIG. 22, in the fourth orientation of the multi-foldable electronic device 100, if the first side member 210 moves away from the second side member 220 by a first distance $D_1$ on the flexible display 160, the first display region 250 within the first range may be exposed to the outside of the multi-foldable electronic device 100. For example, the first distance $D_1$ may be predefined at a manufacturing phase of the multi-foldable electronic device 100, or may be set by the user. For example, the first distance $D_1$ may be identified by the angle sensor and/or the Hall sensor. According to an embodiment, based on the first distance $D_1$, the size of the first display region 250 may be determined.

According to an embodiment of the disclosure, for example, referring to FIG. 22, the multi-foldable electronic device 100 may display the first notification information 730 related to the first event on the first display region 250 within the first range. For example, the first notification information 730 may be at least a part of information related to the first event. For example, as the size of the first display region 250 changes within the first range, the amount of data included in the first notification information displayed on the first display region 250 may vary.

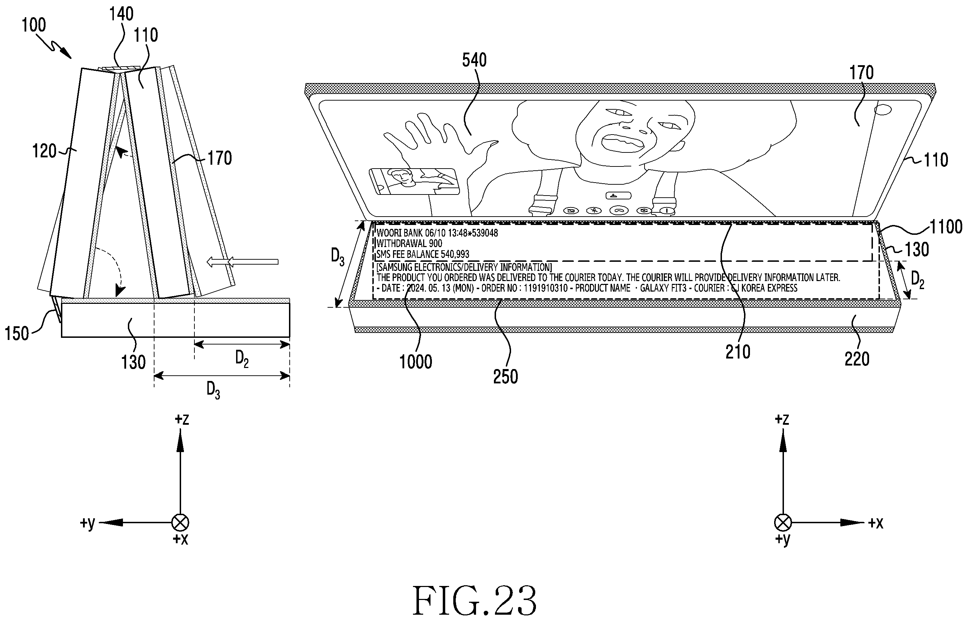

FIG. 23 is a diagram illustrating an example in which a multi-foldable electronic device displays second notification information or third notification information on a first display region, if a size of the first display region falls within a second range or a third range which is greater than a first range according to an embodiment.

According to an embodiment of the disclosure, referring to FIG. 23, in the fourth orientation of the multi-foldable electronic device 100, if the first side member 210 moves away from the second side member 220 by a second distance $D_2$ greater than the first distance $D_1$ on the flexible display 160, the first display region 250 within the second range may be exposed to the outside of the multi-foldable electronic device 100.

According to an embodiment of the disclosure, for example, referring to FIG. 23, the multi-foldable electronic device 100 may display second notification information 1000 related to the first event on the first display region 250 in the second range. For example, the second notification information 1000 may contain more data than the first notification information 730.

According to an embodiment of the disclosure, referring to FIG. 23, in the fourth orientation of the multi-foldable electronic device 100, if the first side member 210 moves away from the second side member 220 by a third distance $D_3$ greater than the second distance $D_2$ on the flexible display 160, the first display region 250 within the third range may be exposed to the outside of the multi-foldable electronic device 100.

According to an embodiment of the disclosure, for example, the multi-foldable electronic device 100 may include more data than the second notification information 1000 on the first display region 250 within the third range. For example, third notification information 1100 may include information related to the first event and information related to the second event which is different from the first event. For example, the information related to the first event and the information related to the second event may be displayed within different layouts. For example, the information related to the first event and the information related to the second event may be sequentially displayed in a direction from the first side member 210 toward the second side member 220.

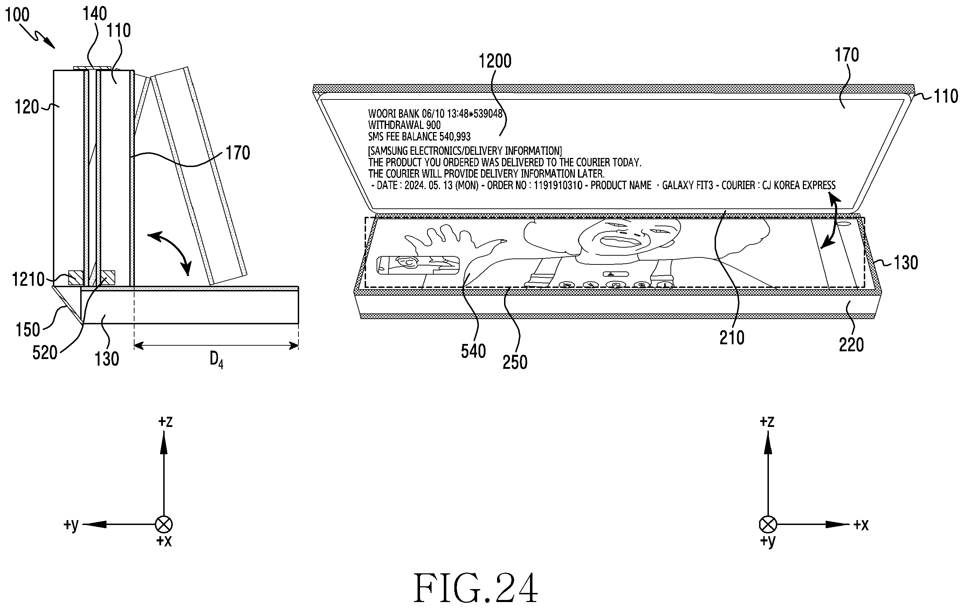

FIG. 24 is a diagram illustrating an example in which a multi-foldable electronic device displays fourth notification information on a sub-display, if a size of the first display region is greater than a third range according to an embodiment.

According to an embodiment of the disclosure, referring to FIG. 24, in the fourth orientation of the multi-foldable electronic device 100, if the first side member 210 moves away from the second side member 220 by a fourth distance $D_4$ greater than the third distance $D_3$ on the flexible display 160, the first display region 250 within the fourth range may be exposed to the outside of the multi-foldable electronic device 100.

According to an embodiment of the disclosure, the multi-foldable electronic device 100 may include a fourth Hall sensor 1210 disposed within the second housing 120. For example, the fourth Hall sensor 1210 may be disposed at a position adjacent to the second hinge 150. For example, in the fourth orientation of the multi-foldable electronic device 100, if the first side member 210 moves away from the second side member 220 by the fourth distance $D_4$ on the flexible display 160, the multi-foldable electronic device 100 may identify the fourth distance $D_4$, based on a change in the magnetic field strength detected by the fourth Hall sensor 1210 and the first Hall sensor 520.

According to an embodiment of the disclosure, the multi-foldable electronic device 100 may include a fourth magnet disposed at a position adjacent to the fourth Hall sensor 1210 and a first magnet disposed at a position adjacent to the first Hall sensor 520. According to an embodiment, as the first side member 210 moves away from the second side member 220 by the fourth distance $D_4$ on the flexible display 160, the strength of the magnetic field of the fourth magnet detected by the first Hall sensor 520 and the strength of the magnetic field of the first magnet detected by the fourth Hall sensor 1210 may increase. The multi-foldable electronic device 100 may identify that the first side member 210 moves away from the second side member 220 by the fourth distance $D_4$ on the flexible display 160, based on the change of the magnetic field strength detected by the first Hall sensor 520 and the fourth Hall sensor 1210. For example, if the first side member 210 moves away from the second side member 220 by the fourth distance $D_4$ on the flexible display 160, the first Hall sensor 520 and the fourth Hall sensor 1210 may be disposed to face each other.

According to an embodiment of the disclosure, the multi-foldable electronic device 100 may display fourth notification information 1200 on the first display region 250 within the fourth range. For example, the fourth notification information 1200 may contain more data than the third notification information 1100. For example, the fourth notification information 1200 may include the application execution screen 540 displayed on the sub-display 170 in the fourth orientation. For example, referring to FIG. 24, if the first side member 210 moves away from the second side member 220 by the fourth distance $D_4$ on the flexible display 160, the application execution screen 540 may be displayed on the first display region 250 and the fourth notification information 1200 may be displayed on the sub-display 170. For example, if the first side member 210 moves away from the second side member 220 by the fourth distance $D_4$ on the flexible display 160, the screen being displayed on the sub-display 170 may be displayed on the first display region 250, and the screen being displayed on the first display region 250 may be displayed on the sub-display 170.

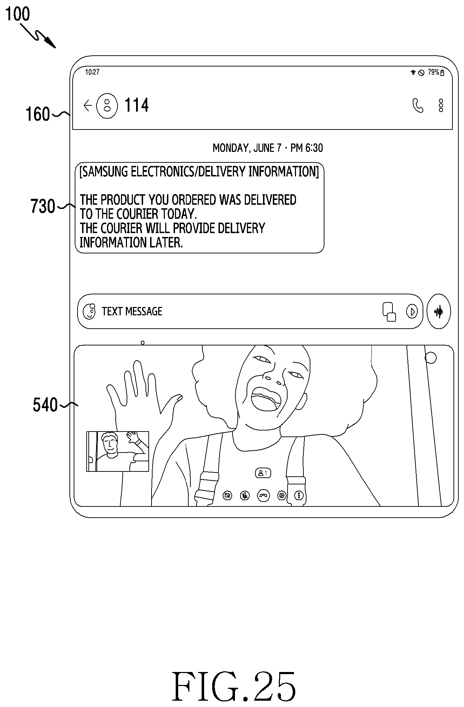

FIG. 25 is a diagram illustrating an example of displaying notification information and an application execution screen on a flexible display, if a multi-foldable electronic device is unfolded according to an embodiment.

According to an embodiment of the disclosure, if the orientation of the multi-foldable electronic device 100 changes from the fourth orientation to the first orientation, the entire region of the flexible display 160 may be exposed to the outside of the multi-foldable electronic device 100. Referring to FIG. 25, according to an embodiment, as the orientation of the multi-foldable electronic device 100 changes from the fourth orientation to the first orientation, the multi-foldable electronic device 100 may display the first notification information 730 and the application execution screen 540 together on the flexible display 160.

According to an embodiment of the disclosure, if the orientation of the multi-foldable electronic device 100 changes from the first orientation to the fourth orientation, the multi-foldable electronic device 100 may display the application execution screen 540 on the sub-display 170.

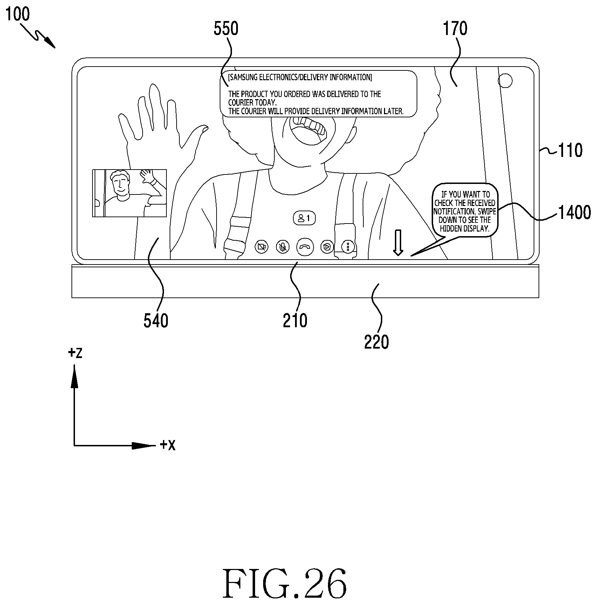

FIG. 26 is a diagram illustrating an example in which a multi-foldable electronic device displays on a sub-display a UI for guiding to move a first side member away from a second side member according to an embodiment.

According to an embodiment of the disclosure, referring to FIG. 26, in the fourth orientation, if the object 550 indicating the occurrence of the first event is displayed on the sub-display 170 while the application execution screen 540 is displayed on the sub-display 170, a UI 1400 for guiding the first display region 250 may be displayed on the sub-display 170. For example, the UI 1400 may be the UI 1400 for guiding exposure of the first display region 250 displaying the first notification information 730.

According to an embodiment of the disclosure, referring to FIG. 26, the UI 1400 may be displayed in a region adjacent to the first side member 210 in the edge region of the sub-display 170. For example, the UI 1400 may include text information including contents for moving the first side member 210 away from the second side member 220. For example, the UI 1400 may include symbol, figure, and/or animation information indicative of the movement direction of the first side member 210.

According to an embodiment of the disclosure, the UI 1400 guiding the exposure of the first display region 250 may disappear from the sub-display 170, after a designated time passes. In the fourth orientation, if the first side member 210 is moved away from the second side member 220 within the designated time, the first display region 250 may be activated, and the first notification information 730 may be displayed on the first display region 250.

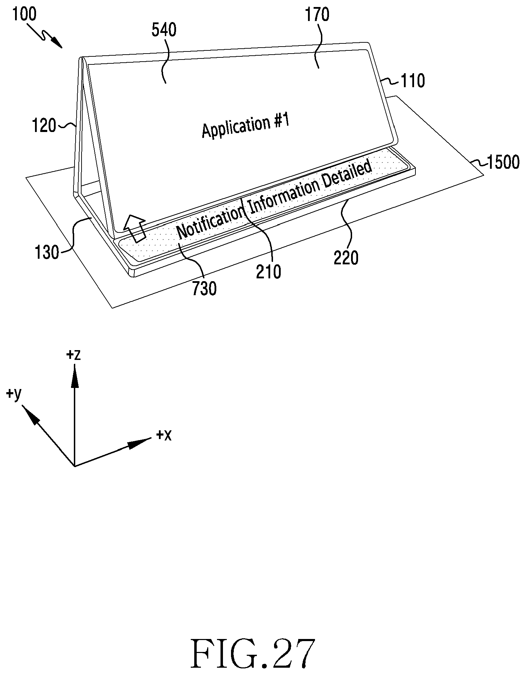

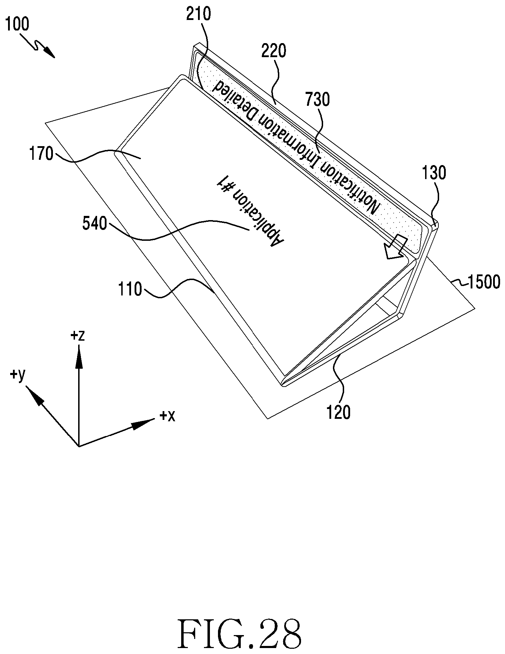

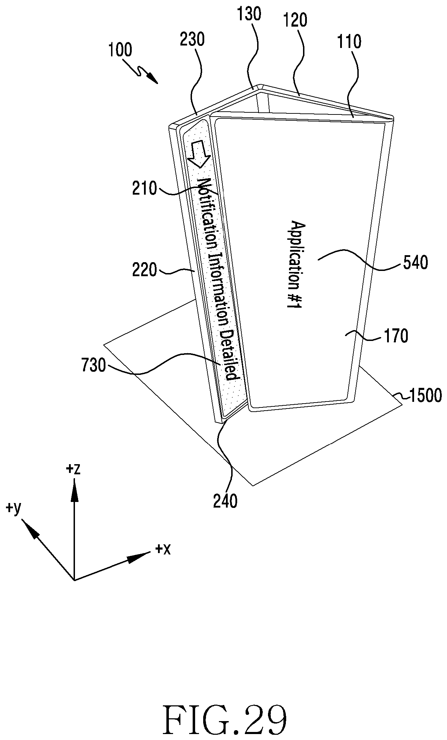

FIG. 27 is a diagram illustrating an example in which a multi-foldable electronic device displays first notification information on a first display, with a third housing placed on a floor according to an embodiment. FIG. 28 is a diagram illustrating an example in which a multi-foldable electronic device displays first notification information on a first display, with a second housing placed on a floor according to an embodiment. FIG. 29 is a diagram illustrating an example in which a multi-foldable electronic device displays first notification information on a first display, with a third side member placed on a floor according to an embodiment.

According to an embodiment of the disclosure, referring to FIG. 27 through FIG. 29, while the multi-foldable electronic device 100 is in the fourth orientation in which the first side member 210 is disposed adjacent to the second side member 220, the facing direction of the third housing 130 may differ, depending on the state in which the multi-foldable electronic device 100 is placed on the floor 1500, and the direction of the first notification information 730 displayed on the first display region 250 may be determined, depending on the facing direction of the third housing 130.

According to an embodiment of the disclosure, Referring to FIG. 27, in the fourth orientation, the multi-foldable electronic device 100 may be arranged such that the third housing 130 is placed on the floor 1500. For example, the multi-foldable electronic device 100 may be arranged such that the third housing 130 is placed in parallel to the floor 1500. For example, the multi-foldable electronic device 100 may be arranged such that one surface of the third housing 130 faces the floor 1500. In an embodiment, referring to FIG. 27, in the fourth orientation of the multi-foldable electronic device 100, while the third housing 130 is placed on the floor 1500, the first display region 250 exposed as the first side member 210 is moved away from the second side member 220 may display the first notification information 730 in a direction from the first side member 210 toward the second side member 220.

According to an embodiment of the disclosure, referring to FIG. 28, in the fourth orientation, the multi-foldable electronic device 100 may be arranged such that the second housing 120 is placed on the floor 1500. For example, the multi-foldable electronic device 100 may be arranged such that the second housing 120 is placed in parallel to the floor 1500. For example, the multi-foldable electronic device 100 may be arranged such that one surface of the second housing 120 faces the floor 1500. For example, the multi-foldable electronic device 100 may be oriented such that the third housing 130 forms a specific angle with the floor 1500. In an embodiment, referring to FIG. 28, in the fourth orientation of the multi-foldable electronic device 100, while the second housing 120 is placed on the floor 1500, the first display region 250 exposed as the first side member 210 is moved away from the second side member 220 may display the first notification information 730 in a direction from the second side member 220 toward the first side member 210.

According to an embodiment of the disclosure, referring to FIG. 29, in the fourth orientation, the multi-foldable electronic device 100 may be arranged such that one of the third side member 230 or the fourth side member 240 of the third housing 130 is placed on the floor 1500. For example, the multi-foldable electronic device 100 may be arranged such that one of the third side member 230 or the fourth side member 240 of the third housing 130 is placed in parallel to the floor 1500. For example, the multi-foldable electronic device 100 may be arranged such that one of one surface of the third side member 230 or one surface of the fourth side member 240 faces the floor 1500. For example, the multi-foldable electronic device 100 may be arranged such that the third housing 130 faces in a direction substantially perpendicular to the floor 1500. In an embodiment, referring to FIG. 29, in the fourth orientation of the multi-foldable electronic device 100, while one surface of the fourth side member 240 is placed on the floor 1500, the first display region 250 exposed as the first side member 210 is moved away from the second side member 220 may display the first notification information 730 in a direction from the third side member 230 toward the fourth side member 240.

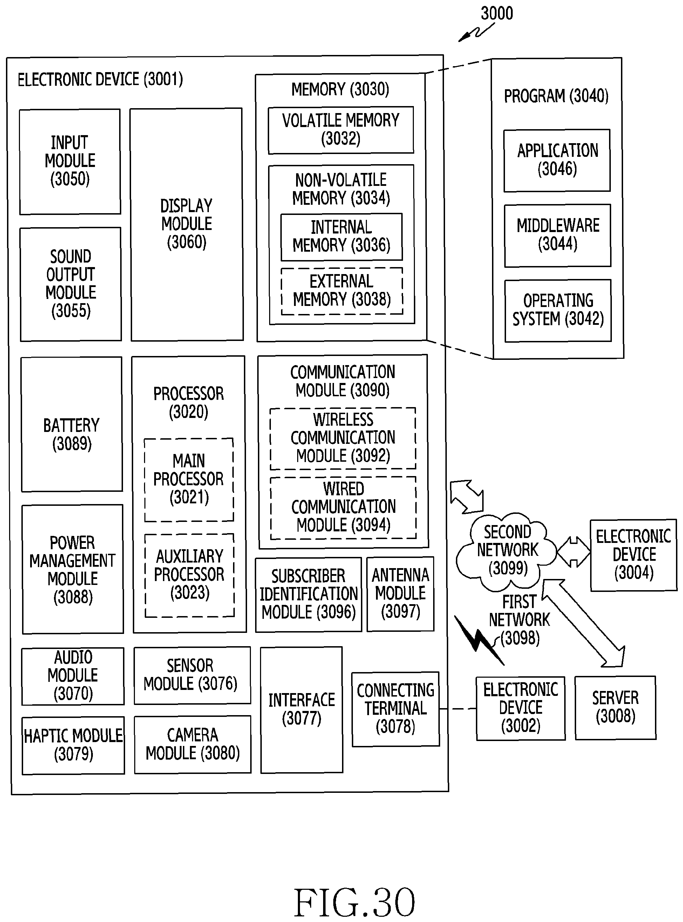

Fig. 30 is a block diagram illustrating an electronic device 3001 in a network environment 3000 according to various embodiments. Referring to Fig. 30, the electronic device 3001 in the network environment 3000 may communicate with an electronic device 3002 via a first network 3098 (e.g., a short-range wireless communication network), or at least one of an electronic device 3004 or a server 3008 via a second network 3099 (e.g., a long-range wireless communication network). According to an embodiment, the electronic device 3001 may communicate with the electronic device 3004 via the server 3008. According to an embodiment, the electronic device 3001 may include a processor 3020, memory 3030, an input module 3050, a sound output module 3055, a display module 3060, an audio module 3070, a sensor module 3076, an interface 3077, a connecting terminal 3078, a haptic module 3079, a camera module 3080, a power management module 3088, a battery 3089, a communication module 3090, a subscriber identification module(SIM) 3096, or an antenna module 3097. In some embodiments, at least one of the components (e.g., the connecting terminal 3078) may be omitted from the electronic device 3001, or one or more other components may be added in the electronic device 3001. In some embodiments, some of the components (e.g., the sensor module 3076, the camera module 3080, or the antenna module 3097) may be implemented as a single component (e.g., the display module 3060).

The processor 3020 may execute, for example, software (e.g., a program 3040) to control at least one other component (e.g., a hardware or software component) of the electronic device 3001 coupled with the processor 3020, and may perform various data processing or computation. According to one embodiment, as at least part of the data processing or computation, the processor 3020 may store a command or data received from another component (e.g., the sensor module 3076 or the communication module 3090) in volatile memory 3032, process the command or the data stored in the volatile memory 3032, and store resulting data in non-volatile memory 3034. According to an embodiment, the processor 3020 may include a main processor 3021 (e.g., a central processing unit (CPU) or an application processor (AP)), or an auxiliary processor 3023 (e.g., a graphics processing unit (GPU), a neural processing unit (NPU), an image signal processor (ISP), a sensor hub processor, or a communication processor (CP)) that is operable independently from, or in conjunction with, the main processor 3021. For example, when the electronic device 3001 includes the main processor 3021 and the auxiliary processor 3023, the auxiliary processor 3023 may be adapted to consume less power than the main processor 3021, or to be specific to a specified function. The auxiliary processor 3023 may be implemented as separate from, or as part of the main processor 3021.

The auxiliary processor 3023 may control at least some of functions or states related to at least one component (e.g., the display module 3060, the sensor module 3076, or the communication module 3090) among the components of the electronic device 3001, instead of the main processor 3021 while the main processor 3021 is in an inactive (e.g., sleep) state, or together with the main processor 3021 while the main processor 3021 is in an active state (e.g., executing an application). According to an embodiment, the auxiliary processor 3023 (e.g., an image signal processor or a communication processor) may be implemented as part of another component (e.g., the camera module 3080 or the communication module 3090) functionally related to the auxiliary processor 3023. According to an embodiment, the auxiliary processor 3023 (e.g., the neural processing unit) may include a hardware structure specified for artificial intelligence model processing. An artificial intelligence model may be generated by machine learning. Such learning may be performed, e.g., by the electronic device 3001 where the artificial intelligence is performed or via a separate server (e.g., the server 3008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 3030 may store various data used by at least one component (e.g., the processor 3020 or the sensor module 3076) of the electronic device 3001. The various data may include, for example, software (e.g., the program 3040) and input data or output data for a command related thererto. The memory 3030 may include the volatile memory 3032 or the non-volatile memory 3034.

The program 3040 may be stored in the memory 3030 as software, and may include, for example, an operating system (OS) 3042, middleware 3044, or an application 3046.

The input module 3050 may receive a command or data to be used by another component (e.g., the processor 3020) of the electronic device 3001, from the outside (e.g., a user) of the electronic device 3001. The input module 3050 may include, for example, a microphone, a mouse, a keyboard, a key (e.g., a button), or a digital pen (e.g., a stylus pen).

The sound output module 3055 may output sound signals to the outside of the electronic device 3001. The sound output module 3055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 3060 may visually provide information to the outside (e.g., a user) of the electronic device 3001. The display module 3060 may include, for example, a display, a hologram device, or a projector and control circuitry to control a corresponding one of the display, hologram device, and projector. According to an embodiment, the display module 3060 may include a touch sensor adapted to detect a touch, or a pressure sensor adapted to measure the intensity of force incurred by the touch.

The audio module 3070 may convert a sound into an electrical signal and vice versa. According to an embodiment, the audio module 3070 may obtain the sound via the input module 3050, or output the sound via the sound output module 3055 or a headphone of an external electronic device (e.g., an electronic device 3002) directly (e.g., wiredly) or wirelessly coupled with the electronic device 3001.

The sensor module 3076 may detect an operational state (e.g., power or temperature) of the electronic device 3001 or an environmental state (e.g., a state of a user) external to the electronic device 3001, and then generate an electrical signal or data value corresponding to the detected state. According to an embodiment, the sensor module 3076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 3077 may support one or more specified protocols to be used for the electronic device 3001 to be coupled with the external electronic device (e.g., the electronic device 3002) directly (e.g., wiredly) or wirelessly. According to an embodiment, the interface 3077 may include, for example, a high definition multimedia interface (HDMI), a universal serial bus (USB) interface, a secure digital (SD) card interface, or an audio interface.

A connecting terminal 3078 may include a connector via which the electronic device 3001 may be physically connected with the external electronic device (e.g., the electronic device 3002). According to an embodiment, the connecting terminal 3078 may include, for example, a HDMI connector, a USB connector, a SD card connector, or an audio connector (e.g., a headphone connector).

The haptic module 3079 may convert an electrical signal into a mechanical stimulus (e.g., a vibration or a movement) or electrical stimulus which may be recognized by a user via his tactile sensation or kinesthetic sensation. According to an embodiment, the haptic module 3079 may include, for example, a motor, a piezoelectric element, or an electric stimulator.

The camera module 3080 may capture a still image or moving images. According to an embodiment, the camera module 3080 may include one or more lenses, image sensors, image signal processors, or flashes.

The power management module 3088 may manage power supplied to the electronic device 3001. According to one embodiment, the power management module 3088 may be implemented as at least part of, for example, a power management integrated circuit (PMIC).

The battery 3089 may supply power to at least one component of the electronic device 3001. According to an embodiment, the battery 3089 may include, for example, a primary cell which is not rechargeable, a secondary cell which is rechargeable, or a fuel cell.

The communication module 3090 may support establishing a direct (e.g., wired) communication channel or a wireless communication channel between the electronic device 3001 and the external electronic device (e.g., the electronic device 3002, the electronic device 3004, or the server 3008) and performing communication via the established communication channel. The communication module 3090 may include one or more communication processors that are operable independently from the processor 3020 (e.g., the application processor (AP)) and supports a direct (e.g., wired) communication or a wireless communication. According to an embodiment, the communication module 3090 may include a wireless communication module 3092 (e.g., a cellular communication module, a short-range wireless communication module, or a global navigation satellite system (GNSS) communication module) or a wired communication module 3094 (e.g., a local area network (LAN) communication module or a power line communication (PLC) module). A corresponding one of these communication modules may communicate with the external electronic device via the first network 3098 (e.g., a short-range communication network, such as Bluetooth™, wireless-fidelity (Wi-Fi) direct, or infrared data association (IrDA)) or the second network 3099 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 3092 may identify and authenticate the electronic device 3001 in a communication network, such as the first network 3098 or the second network 3099, using subscriber information (e.g., international mobile subscriber identity (IMSI)) stored in the subscriber identification module 3096.

The wireless communication module 3092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 3092 may support a high-frequency band (e.g., the mmWave band) to achieve, e.g., a high data transmission rate. The wireless communication module 3092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 3092 may support various requirements specified in the electronic device 3001, an external electronic device (e.g., the electronic device 3004), or a network system (e.g., the second network 3099). According to an embodiment, the wireless communication module 3092 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 3097 may transmit or receive a signal or power to or from the outside (e.g., the external electronic device) of the electronic device 3001. According to an embodiment, the antenna module 3097 may include an antenna including a radiating element composed of a conductive material or a conductive pattern formed in or on a substrate (e.g., a printed circuit board (PCB)). According to an embodiment, the antenna module 3097 may include a plurality of antennas (e.g., array antennas). In such a case, at least one antenna appropriate for a communication scheme used in the communication network, such as the first network 3098 or the second network 3099, may be selected, for example, by the communication module 3090 (e.g., the wireless communication module 3092) from the plurality of antennas. The signal or the power may then be transmitted or received between the communication module 3090 and the external electronic device via the selected at least one antenna. According to an embodiment, another component (e.g., a radio frequency integrated circuit (RFIC)) other than the radiating element may be additionally formed as part of the antenna module 3097.

According to various embodiments, the antenna module 3097 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 3001 and the external electronic device 3004 via the server 3008 coupled with the second network 3099. Each of the electronic devices 3002 or 3004 may be a device of a same type as, or a different type, from the electronic device 3001. According to an embodiment, all or some of operations to be executed at the electronic device 3001 may be executed at one or more of the external electronic devices 3002, 3004, or 3008. For example, if the electronic device 3001 should perform a function or a service automatically, or in response to a request from a user or another device, the electronic device 3001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 3001. The electronic device 3001 may provide the outcome, with or without further processing of the outcome, as at least part of a reply to the request. To that end, a cloud computing, distributed computing, mobile edge computing (MEC), or client-server computing technology may be used, for example. The electronic device 3001 may provide ultra low-latency services using, e.g., distributed computing or mobile edge computing. In another embodiment, the external electronic device 3004 may include an internet-of-things (IoT) device. The server 3008 may be an intelligent server using machine learning and/or a neural network. According to an embodiment, the external electronic device 3004 or the server 3008 may be included in the second network 3099. The electronic device 3001 may be applied to intelligent services (e.g., smart home, smart city, smart car, or healthcare) based on 5G communication technology or IoT-related technology.

Problems to be solved according to an embodiment of the disclosure may be as follows.

According to an embodiment of the disclosure, the multi-foldable electronic device may provide the application execution screen displayed on the sub-display of the first housing, while the first side member of the first housing is disposed at a position adjacent to the second side member of the third housing, as the first housing and the third housing are folded with respect to the second housing.

According to an embodiment of the disclosure, the multi-foldable electronic device may provide notification information on the flexible display without interrupting the application execution screen displayed on the sub-display.

According to an embodiment of the disclosure, the multi-foldable electronic device may display the flexible display allowing to adjust the size of the region exposed to outside, as the first side member is moved away from the second side member.

A multi-foldable electronic device according to an embodiment of the disclosure may include: a foldable housing comprising at least a first housing, a second housing and a third housing, the second housing disposed between the first housing and the third housing; a first hinge rotatably connecting the first housing and the second housing; a second hinge rotatably connecting the second housing and the third housing; a main display disposed at least in part on a front side of the third housing; a sub-display disposed on a rear side of the first housing; a memory for storing instructions; and at least one processor. The instructions, when executed by the at least one processor, cause the multi-foldable electronic device to: identify that the foldable housing is positioned with a first side member of the first housing resting upon the main display such that, when a user views the sub display, an area of the main display greater than a predefined threshold is visible adjacent to the sub display; and, based on identifying that the foldable housing is positioned with a first side member of the first housing resting upon the main display such that, when a user views the sub display, an area of the main display greater than a predefined threshold is visible adjacent to the sub display, display the execution screen of an application on the sub display and display first notification information related to a first event on the part of the main display which is visible when a user views the sub display.

The instructions, when executed by the at least one processor, may further cause the multi-foldable electronic device to: identify that the foldable housing is positioned with a first side member of the first housing resting upon the main display such that, when a user views the sub display, an area of the main display less than or equal to a predefined threshold is visible adjacent to the sub display; and based on identifying that the foldable housing is positioned with a first side member of the first housing resting upon the main display such that, when a user views the sub display, an area of the main display less than or equal to a predefined threshold is visible adjacent to the sub display, display the execution screen of the application on the sub display and display first notification information related to a first event on the sub display.

A multi-foldable electronic device according to an embodiment of the disclosure may include: a foldable housing comprising a first housing, a second housing and a third housing, the second housing disposed between the first housing and the third housing; a first hinge rotatably connecting the first housing and the second housing; a second hinge rotatably connecting the second housing and the third housing; a main display disposed at least in part on a front side of the third housing; a sub-display disposed on a rear side of the first housing; a memory for storing instructions; and at least one processor. The instructions, when executed by the at least one processor, cause the multi-foldable electronic device to: identify a first orientation of the foldable housing in which a first side member of the first housing is disposed adjacent to a second side member of the third housing; display an execution screen of an application on the sub-display, based on identifying that the foldable housing is in the first orientation; while the foldable housing is in the first orientation, display the execution screen of the application and an object indicating first event occurrence on the sub-display; identify that the foldable housing moves from the first orientation, to a second orientation in which the first side member of the first housing is disposed on the front side and the first side member is spaced away from the second side member of the third housing; and, based on identifying that the foldable housing moves from the first orientation to the second orientation, display first notification information related to the first event on a part of the main display exposed between the first side member of the first housing and the second side member of the third housing.

The main display may be a flexible display. The main display may extend onto a front side of the second housing. The main display may extend onto a front side of the first housing.

A multi-foldable electronic device according to an embodiment of the disclosure may include a foldable housing including a first housing, a second housing and a third housing. The second housing may be disposed between the first housing and the third housing. The multi-foldable electronic device may include a first hinge rotatably connecting the first housing and the second housing, a second hinge rotatably connecting the second housing and the third housing, a flexible display disposed at least in part on a front side of the first housing, a front side of the second housing and a front side of the third housing, a sub-display disposed on a rear side opposite to the front side of the first housing, a memory for storing instructions, and at least one processor. The instructions may be executed by the at least one processor, to cause the multi-foldable electronic device to identify a first orientation of the foldable housing in which a first side member of the first housing is disposed adjacent to a second side member of the third housing. The instructions may be executed by the at least one processor, to cause the multi-foldable electronic device to display an execution screen of an application on the sub-display, based on identifying that the foldable housing is in the first orientation. The instructions may be executed by the at least one processor, to cause the multi-foldable electronic device to, while the foldable housing is in the first orientation, display the execution screen of the application and an object indicating first event occurrence on the sub-display. The instructions may be executed by the at least one processor, to cause the multi-foldable electronic device to identify that the foldable housing moves from the first orientation, to a second orientation in which the first side member of the first housing is disposed on the front side and the first side member is spaced away from the second side member of the third housing. The instructions may be executed by the at least one processor, to cause the multi-foldable electronic device to, based on identifying that the foldable housing moves from the first orientation to the second orientation, display first notification information related to the first event on a part of the flexible display exposed between the first side member of the first housing and the second side member of the third housing.

The first side member may be at a side of the first housing opposite to the first hinge. The first side member may be a member forming an edge of the first housing which is adjacent to the sub display and opposite to the first hinge The second side member may be at a side of the third housing opposite to the second hinge. The second side member may be a member forming an edge of the third housing which is adjacent to the main display and opposite to the second hinge.

According to an embodiment of the disclosure, the multi-foldable electronic device may further include a first sensor disposed in the first hinge and a second sensor disposed in the second hinge. The instructions may be executed by the at least one processor, to cause the multi-foldable electronic device to identify a first folding angle between the first housing and the second housing, using the first sensor, identify a second folding angle between the second housing and the third housing, using the second sensor, and identify the first orientation of the foldable housing, based on the first folding angle and the second folding angle.

According to an embodiment of the disclosure, the multi-foldable electronic device may further include a first Hall sensor disposed adjacent to the first side member of the first housing and a second Hall sensor disposed adjacent to the second side member of the third housing. The instructions may be executed by the at least one processor, to cause the multi-foldable electronic device to, as the first Hall sensor moves close to the second Hall sensor, identify the first orientation of the foldable housing.

According to an embodiment of the disclosure, the first side member of the first housing may move away from the second side member of the third housing, along a third side member of the third housing and a fourth side member opposite to the third side member. The third side member and the fourth side member may be formed substantially perpendicular to the second side member.

According to an embodiment of the disclosure, the instructions may be executed by the at least one processor, to cause the multi-foldable electronic device to, as the first side member moves away from the second side member on the flexible display, identify a third folding angle smaller than the first folding angle using the first sensor, and identify a fourth folding angle greater than the second folding angle using the second sensor, and identify the first display region, based on the third folding angle and the fourth folding angle.

According to an embodiment of the disclosure, the first side member of the first housing may further include a third Hall sensor disposed away from the second side member by a specific distance, along a direction away from the second side member. The instructions may be executed by the at least one processor, to cause the multi-foldable electronic device to identify the first display region, as the first Hall sensor and the third Hall sensor are positioned at adjacent positions.

According to an embodiment of the disclosure, the instructions may be executed by the at least one processor, to cause the multi-foldable electronic device to display the first notification information on the first display region if a size of the first display region falls within a first range, and display second notification information on the first display region if the size of the first display region falls within a second range greater than the first range. The second notification information may include more data related to the first event than the first notification information.

According to an embodiment of the disclosure, the instructions may be executed by the at least one processor, to cause the multi-foldable electronic device to display the second notification information and third notification information on the first display region if the size of the first display region falls within a third range greater than the second range. The third notification information may be related to a second event which is different from the first event.

According to an embodiment of the disclosure, the instructions may be executed by the at least one processor, to cause the multi-foldable electronic device to, while the first side member is disposed adjacent to the second side member, display on the sub-display a UI for guiding to move the first side member from the second side member on the flexible display.

According to an embodiment of the disclosure, the instructions may be executed by the at least one processor, to cause the multi-foldable electronic device to, if the size of the first display region falls within a fourth range smaller than the first range, emit light in at least a part of the first display region.

According to an embodiment of the disclosure, the instructions may be executed by the at least one processor, to cause the multi-foldable electronic device to, while the first side member is disposed adjacent to the second side member, identify a facing direction of the third housing, and determine a displaying direction of the first notification information displayed on the first display region, based on the identified direction.

According to an embodiment of the disclosure, the instructions may be executed by the at least one processor, to cause the multi-foldable electronic device to, as the first side member moves from the second side member on the flexible display, activate the first display region, and maintain inactivation a second display region excluding the first display region in the whole region of the flexible display.

According to an embodiment of the disclosure, the instructions may be executed by the at least one processor, to cause the multi-foldable electronic device to, while a touch input of a user for the object is maintained, display the first notification information on the first display region, as the first side member moves from the second side member on the flexible display.

According to an embodiment of the disclosure, the instructions may be executed by the at least one processor, to cause the multi-foldable electronic device to, while displaying the object on the sub-display, as the first side member moves from the second side member on the flexible display, display the first notification information on the first display region. The object may be displayed on the sub-display for a designated time and then disappears from the sub-display.

According to an embodiment of the disclosure, a fourth Hall sensor disposed in the second housing to be adjacent to the second hinge may be further included. The instructions may be executed by the at least one processor, to cause the multi-foldable electronic device to, as the first side member moves from the second side member on the flexible display, identify that the first Hall sensor is disposed adjacent to the fourth Hall sensor, and while the first Hall sensor is disposed adjacent to the fourth Hall sensor, display the application execution screen on the first display region, and display the first notification information on the sub-display.

In an operating method of a multi-foldable electronic device according to an embodiment of the disclosure, the multi-foldable electronic device may include a foldable housing including a first housing, a second housing and a third housing. The second housing may be disposed between the first housing and the third housing. The multi-foldable electronic device may include a first hinge rotatably connecting the first housing and the second housing, a second hinge rotatably connecting the second housing and the third housing, a flexible display disposed at least in part on a front side of the first housing, a front side of the second housing and a front side of the third housing, and a sub-display disposed on a rear side opposite to the front side of the first housing. The method may include identifying a first orientation of the foldable housing in which a first side member of the first housing is disposed adjacent to a second side member of the third housing, displaying an execution screen of an application on the sub-display, based on identifying that the foldable housing is in the first orientation, while the foldable housing is in the first orientation, displaying the execution screen of the application and an object indicating first event occurrence on the sub-display, identifying that the foldable housing moves from the first orientation, to a second orientation in which the first side member of the first housing is disposed on the front surface and the first side member is spaced away from the second side member of the third housing, and, based on identifying that the foldable housing moves from the first orientation to the second orientation, displaying first notification information related to the first event on a part of the flexible display exposed between the first side member of the first housing and the second side member of the third housing.

According to an embodiment of the disclosure, the operating method of the multi-foldable electronic device may further include displaying the first notification information on the first display region if a size of the first display region falls within a first range, and displaying second notification information on the second display region if the size of the first display region falls within a second range greater than the first range. The second notification information may include more data related to the first event than the first notification information.

According to an embodiment of the disclosure, the operating method of the multi-foldable electronic device may further include, if the size of the first display region falls within a third range greater than the second range, displaying the second notification information and third notification information on the first display region. The third notification information may be related to a second event which is different from the first event.

According to an embodiment of the disclosure, the operating method of the multi-foldable electronic device may further include, while the first side member is disposed adjacent to the second side member, displaying on the sub-display a UI for guiding to move the first side member away from the second side member on the flexible display.

According to an embodiment of the disclosure, the operating method of the multi-foldable electronic device may further include, if the first display region falls within a fourth range smaller than the first range, emitting light in at least a part of the first display region.

Effects of the invention according to an embodiment of the disclosure are as follows.

According to an embodiment of the disclosure, by displaying the notification information on the first display region exposed to the outside in the whole region of the flexible display, while displaying the application execution screen on the sub-display, the multi-foldable electronic device may allow the user to identify the notification information without interrupting the application execution screen, thus increasing user convenience.

According to an embodiment of the disclosure, since the multi-foldable electronic device provides the notification information appropriate to the size of the first display region, the user may freely adjust the size of the first display region according to the type of the notification information.

Besides, various effects directly or indirectly obtained from the disclosure may be provided.

The methods according to the embodiments described in the claims or the specification of the disclosure may be implemented in software, hardware, or a combination of hardware and software.

In software implementation, a computer-readable storage medium storing one or more programs (software modules) may be provided. One or more programs stored in the computer-readable storage medium may be configured for execution by one or more processors of an electronic device. One or more programs may include instructions for controlling an electronic device to execute the methods according to the embodiments described in the claims or the specification of the disclosure.

Such a program (software module, software) may be stored to a random access memory, a non-volatile memory including a flash memory, a read only memory (ROM), an electrically erasable programmable ROM (EEPROM), a magnetic disc storage device, a CD-ROM, digital versatile discs (DVDs) or other optical storage devices, and a magnetic cassette. Alternatively, it may be stored to a memory combining part or all of them. In addition, a plurality of memories may be included.

Also, the program may be stored in an attachable storage device accessible via a communication network such as internet, intranet, local area network (LAN), wide LAN (WLAN), or storage area network (SAN), or a communication network by combining these networks. Such a storage device may access a device which executes an embodiment of the disclosure through an external port. In addition, a separate storage device on the communication network may access the device which executes an embodiment of the disclosure.

In the specific embodiments of the disclosure, the component included in the disclosure is expressed in a singular or plural form. However, the singular or plural expression is appropriately selected according to a proposed situation for the convenience of explanation, the disclosure is not limited to a single component or a plurality of components, the components expressed in the plural form may be configured as a single component, and the components expressed in the singular form may be configured as a plurality of components.

In addition, a term such as "unit" or "module" in the disclosure may be a hardware component such as a processor or a circuit, and/or a software component executed by a hardware component such as a processor.

"unit" and "module" may be stored in an addressable storage medium and implemented by a program executable by the processor. For example, "unit" and "module" may be implemented by components such as software components, object-oriented software components, class components and task components, processes, functions, attributes, procedures, sub-routines, segments of program code, drivers, firmware, microcode, circuit, data, databases, data structures, tables, arrays and variables.

Specific implementations described in this disclosure are merely embodiments, and are not intended to limit the scope of the disclosure in any way. For the sake of brevity of the specification, disclosure of conventional electronic configurations, control systems, software, and other functional aspects of the systems may be omitted.

In addition, in the disclosure, "including at least one of a, b, or c" may indicate "including a alone, including b alone, including c alone, including a and b, including b and c, including a and c, or including all of a, b, and c".

Meanwhile, while the specific embodiment has been described in the detailed explanation of the disclosure, it will be noted that various modifications may be made without departing from the scope of the disclosure. Therefore, the scope of the disclosure is not limited and defined by the described embodiment and is defined by not only the scope of the claims as below but also their equivalents.

**Claims**

1. A multi-foldable electronic device comprising:

a foldable housing comprising a first housing, a second housing and a third housing, the second housing disposed between the first housing and the third housing;
a first hinge rotatably connecting the first housing and the second housing;
a second hinge rotatably connecting the second housing and the third housing;
a flexible display disposed at least in part on a front side of the first housing, a front side of the second housing and a front side of the third housing;
a sub-display disposed on a rear side opposite to the front side of the first housing;
a memory for storing instructions; and
at least one processor,
wherein the instructions are executed by the at least one processor, to cause the multi-foldable electronic device to:

identify a first orientation of the foldable housing in which a first side member of the first housing is disposed adjacent to a second side member of the third housing,
display an execution screen of an application on the sub-display, based on identifying that the foldable housing is in the first orientation,
while the foldable housing is in the first orientation, display the execution screen of the application and an object indicating first event occurrence on the sub-display,
identify that the foldable housing moves from the first orientation, to a second orientation in which the first side member of the first housing is disposed on the front side and the first side member is spaced away from the second side member of the third housing, and
based on identifying that the foldable housing moves from the first orientation to the second orientation, display first notification information related to the first event on a part of the flexible display exposed between the first side member of the first housing and the second side member of the third housing.

2. The multi-foldable electronic device of claim 1, further comprising:

a first sensor disposed in the first hinge; and
a second sensor disposed in the second hinge,
wherein the instructions are executed by the at least one processor, to cause the multi-foldable electronic device to:

identify a first folding angle between the first housing and the second housing, using the first sensor,
identify a second folding angle between the second housing and the third housing, using the second sensor, and
identify the first orientation of the foldable housing, based on the first folding angle and the second folding angle.

3. The multi-foldable electronic device of claim 1, further comprising:

a first Hall sensor disposed adjacent to the first side member of the first housing; and
a second Hall sensor disposed adjacent to the second side member of the third housing,
wherein the instructions are executed by the at least one processor, to cause the multi-foldable electronic device to:
as the first Hall sensor moves close to the second Hall sensor, identify the first orientation of the foldable housing.

4. The multi-foldable electronic device of claim 1, wherein the first side member of the first housing moves away from the second side member of the third housing, along a third side member of the third housing and a fourth side member opposite to the third side member, and
the third side member and the fourth side member are formed substantially perpendicular to the second side member.

5. The multi-foldable electronic device of claim 2, wherein the instructions are executed by the at least one processor, to cause the multi-foldable electronic device to:

based on identifying that the foldable housing moves from the first orientation to the second orientation, identify a third folding angle smaller than the first folding angle using the first sensor, and identify a fourth folding angle greater than the second folding angle using the second sensor, and
identify the exposed part of the flexible display, based on the third folding angle and the fourth folding angle.

**6.** The multi-foldable electronic device of claim 3, further comprising:

a third Hall sensor disposed away from the second side member by a specific distance, along a direction away from the second side member,

wherein the instructions are executed by the at least one processor, to cause the multi-foldable electronic device to:

as the first Hall sensor moves close to the third Hall sensor, identify the exposed part of the flexible display.

**7.** The multi-foldable electronic device of claim 1, wherein the instructions are executed by the at least one processor, to cause the multi-foldable electronic device to:

if a size of the exposed part of the flexible display falls within a first range, display the first notification information on the exposed part of the flexible display, and

if the size of the exposed part of the flexible display falls within a second range greater than the first range, display second notification information on the exposed part of the flexible display,

wherein the second notification information comprises more data related to the first event than the first notification information.

**8.** The multi-foldable electronic device of claim 1, wherein the instructions are executed by the at least one processor, to cause the multi-foldable electronic device to:

while the foldable housing is in the first orientation, display on the sub-display a user interface (UI) for guiding to move the foldable housing from the first orientation to the second orientation.

**9.** The multi-foldable electronic device of claim 7, wherein the instructions are executed by the at least one processor, to cause the multi-foldable electronic device to:

if the size of the exposed part of the flexible display falls within a fourth range smaller than the first range, emit light in at least a part of the exposed part of the flexible display.

**10.** The multi-foldable electronic device of claim 1, wherein the instructions are executed by the at least one processor, to cause the multi-foldable electronic device to:

while the foldable housing is in the first orientation, identify a facing direction of the third housing, and

determine a displaying direction of the first notification information displayed on the exposed part of the flexible display, based on the identified direction.

**11.** The multi-foldable electronic device of claim 1, wherein the instructions are executed by the at least one processor, to cause the multi-foldable electronic device to:

as the foldable housing moves from the first orientation to the second orientation, activate the exposed part of the flexible display, and maintain inactivation of other region than the exposed part of the flexible display in the whole region of the flexible display.

**12.** The multi-foldable electronic device of claim 1, wherein the instructions are executed by the at least one processor, to cause the multi-foldable electronic device to:
while a touch input of a user for the object is maintained, display the first notification information on the exposed part of the flexible display, as the foldable housing is moved from the first orientation and the second orientation.

**13.** The multi-foldable electronic device of claim 1, wherein the instructions are executed by the at least one processor, to cause the multi-foldable electronic device to:

while displaying the object on the sub-display, as the foldable housing moves from the first orientation to the second orientation, display the first notification information on the exposed part of the flexible display, and

the object is displayed on the sub-display for a designated time and then disappears from the sub-display.

**14.** The multi-foldable electronic device of claim 1, further comprising:

a fourth Hall sensor disposed in the second housing to be adjacent to the second hinge, wherein the instructions are executed by the at least one processor, to cause the multi-foldable electronic device to:

as the foldable housing moves from the first orientation to the second orientation, identify that the first Hall sensor is disposed adjacent to the fourth Hall sensor, and while the first Hall sensor is disposed adjacent to the fourth Hall sensor, display the application execution screen on the exposed part of the flexible display, and display the first notification information on the sub-display.

15. An operating method of a multi-foldable electronic device, the multi-foldable electronic device which comprises,

a foldable housing comprising a first housing, a second housing and a third housing, the second housing disposed between the first housing and the third housing;
a first hinge rotatably connecting the first housing and the second housing;
a second hinge rotatably connecting the second housing and the third housing;
a flexible display disposed at least in part on a front side of the first housing, a front side of the second housing and a front side of the third housing; and
a sub-display disposed on a rear side opposite to the front side of the first housing;
the method comprising:

identifying a first orientation of the foldable housing in which a first side member of the first housing is disposed adjacent to a second side member of the third housing;
displaying an execution screen of an application on the sub-display, based on identifying that the foldable housing is in the first orientation;
while the foldable housing is in the first orientation, displaying the execution screen of the application and an object indicating first event occurrence on the sub-display;
identifying that the foldable housing moves from the first orientation, to a second orientation in which the first side member of the first housing is disposed on the front surface and the first side member is spaced away from the second side member of the third housing; and
based on identifying that the foldable housing moves from the first orientation to the second orientation, displaying first notification information related to the first event on a part of the flexible display exposed between the first side member of the first housing and the second side member of the third housing.

FIG.1

FIG.2

FIG.3

100

130          140          110

150          120

+Z

+X

# FIG.4

FIG.5

FIG.6

FIG.7

300

START

IDENTIFY WHETHER FIRST SIDE MEMBER OF
FIRST HOUSING IS POSITIONED ADJACENT TO
SECOND SIDE MEMBER OF THIRD HOUSING ~310

DISPLAY EXECUTION SCREEN OF
APPLICATION ON SUB-DISPLAY ~320

DISPLAY OBJECT INDICATING FIRST EVENT
OCCURRENCE IN MULTI-FOLDABLE ELECTRONIC
DEVICE ~330

IDENTIFY FIRST DISPLAY REGION, AS FIRST SIDE
MEMBER MOVES AWAY FROM SECOND SIDE MEMBER ~340

DISPLAY FIRST NOTIFICATION INFORMATION
RELATED TO FIRST EVENT ON FIRST DISPLAY REGION ~350

END

FIG.8

400, 310

```
        ┌─────────────┐
        │    START    │
        └──────┬──────┘
               │
               ▼
   ┌───────────────────────────────┐
   │ IDENTIFY FIRST FOLDING ANGLE USING │ ~410
   │         FIRST SENSOR          │
   └───────────────┬───────────────┘
                   │
                   ▼
   ┌───────────────────────────────┐
   │ IDENTIFY SECOND FOLDING ANGLE USING │ ~420
   │         SECOND SENSOR         │
   └───────────────┬───────────────┘
                   │
                   ▼
   ┌───────────────────────────────────┐
   │ IDENTIFY WHETHER FIRST SIDE MEMBER 210 IS │
   │ POSITIONED ADJACENT TO SECOND SIDE  │ ~430
   │ MEMBER BASED ON FIRST FOLDING ANGLE AND │
   │     SECOND FOLDING ANGLE      │
   └───────────────┬───────────────────┘
                   │
                   ▼
        ┌─────────────┐
        │     320     │
        └─────────────┘
```

# FIG.9

FIG.10

500, 310

START

AS FIRST HALL SENSOR AND SECOND HALL
SENSOR ARE DISPOSED AT ADJACENT POSITIONS,
IDENTIFY WHETHER FIRST SIDE MEMBER IS
DISPOSED ADJACENT TO SECOND SIDE MEMBER ~510

320

FIG.11

FIG.12

FIG.13

[SAMSUNG ELECTRONICS/DELIVERY INFORMATION]

THE PRODUCT YOU ORDERED WAS DELIVERED TO THE COURIER TODAY.
THE COURIER WILL PROVIDE DELIVERY INFORMATION LATER.

FIG.14

600, 340

```
          ┌─────────┐
          │   330   │
          └────┬────┘
               │
               ▼
  ┌────────────────────────────────────┐
  │ IDENTIFY THIRD FOLDING ANGLE SMALLER THAN │ ～610
  │ FIRST FOLDING ANGLE USING FIRST SENSOR    │
  └────────────────┬───────────────────┘
               │
               ▼
  ┌────────────────────────────────────┐
  │ IDENTIFY FOURTH FOLDING ANGLE GREATER THAN │ ～620
  │ SECOND FOLDING ANGLE USING SECOND SENSOR   │
  └────────────────┬───────────────────┘
               │
               ▼
  ┌────────────────────────────────────┐
  │ IDENTIFY FIRST DISPLAY REGION BASED ON THIRD │ ～630
  │ FOLDING ANGLE AND FOURTH FOLDING ANGLE       │
  └────────────────┬───────────────────┘
               │
               ▼
          ┌─────────┐
          │   350   │
          └─────────┘
```

# FIG.15

FIG.16

700, 340

330

IDENTIFY FIRST DISPLAY REGION AS FIRST HALL SENSOR AND THIRD HALL SENSOR ARE DISPOSED AT ADJACENT POSITIONS ~710

350

# FIG.17

FIG.18

FIG.19

800

( 240 )

↓

810

SIZE OF FIRST DISPLAY REGION FALLS WITHIN FIRST RANGE? —YES→ ( 350 )

↓ NO

820

SIZE OF FIRST DISPLAY REGION IS GREATER THAN FIRST RANGE? —NO→ GUIDE TO ADJUST SIZE OF FIRST DISPLAY REGION | 830

↓ YES

840

SIZE OF FIRST DISPLAY REGION FALLS WITHIN SECOND RANGE GREATER THAN FIRST RANGE? —YES→ DISPLAY SECOND NOTIFICATION INFORMATION ON FIRST DISPLAY REGION | 850

↓ NO

860

SIZE OF FIRST DISPLAY REGION FALLS WITHIN THIRD RANGE GREATER THAN SECOND RANGE? —NO→ DISPLAY FOURTH NOTIFICATION INFORMATION ON FLEXIBLE DISPLAY | 870

↓ YES

880

DISPLAY THIRD NOTIFICATION INFORMATION ON FIRST DISPLAY REGION → ( END )

FIG.20

FIG.21

FIG.22

FIG.23

FIG.24

100

160

10:27

← (8) 114

MONDAY, JUNE 7 · PM 6:30

[SAMSUNG ELECTRONICS/DELIVERY INFORMATION]

730

THE PRODUCT YOU ORDERED WAS DELIVERED
TO THE COURIER TODAY.
THE COURIER WILL PROVIDE DELIVERY
INFORMATION LATER.

TEXT MESSAGE

540

# FIG.25

FIG.26

FIG.27

FIG.28

FIG.29

3000

ELECTRONIC DEVICE (3001)

INPUT
MODULE
(3050)

SOUND
OUTPUT
MODULE
(3055)

DISPLAY
MODULE
(3060)

MEMORY (3030)

VOLATILE MEMORY
(3032)

NON-VOLATILE
MEMORY (3034)

INTERNAL
MEMORY (3036)

EXTERNAL
MEMORY (3038)

PROGRAM (3040)

APPLICATION
(3046)

MIDDLEWARE
(3044)

OPERATING
SYSTEM (3042)

BATTERY
(3089)

POWER
MANAGEMENT
MODULE
(3088)

PROCESSOR
(3020)

MAIN
PROCESSOR
(3021)

AUXILIARY
PROCESSOR
(3023)

COMMUNICATION
MODULE (3090)

WIRELESS
COMMUNICATION
MODULE (3092)

WIRED
COMMUNICATION
MODULE (3094)

SUBSCRIBER
IDENTIFICATION
MODULE (3096)

ANTENNA
MODULE
(3097)

SECOND
NETWORK
(3099)

ELECTRONIC
DEVICE
(3004)

FIRST
NETWORK
(3098)

AUDIO
MODULE
(3070)

HAPTIC MODULE
(3079)

SENSOR
MODULE (3076)

CAMERA
MODULE (3080)

INTERFACE
(3077)

CONNECTING
TERMINAL
(3078)

ELECTRONIC
DEVICE
(3002)

SERVER
(3008)

FIG.30

## INTERNATIONAL SEARCH REPORT

| International application No. |
| --- |
| **PCT/KR2025/013900** |

| A. | CLASSIFICATION OF SUBJECT MATTER |
| --- | --- |

G06F 3/0484(2013.01)i; G06F 1/16(2006.01)i; G06F 3/0481(2013.01)i; H04M 1/72454(2021.01)i; G01D 5/14(2006.01)i

According to International Patent Classification (IPC) or to both national classification and IPC

| B. | FIELDS SEARCHED |
| --- | --- |

Minimum documentation searched (classification system followed by classification symbols)

G06F 3/0484(2013.01); G06F 1/16(2006.01); G06F 3/0481(2013.01); G06F 3/0488(2013.01); H04M 1/02(2006.01); H04N 21/431(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 멀티(multi), 폴더블(foldable), 힌지(hinge), 플렉서블 디스플레이(flexible display), 상태(orientation), 어플리케이션(application), 알림 정보(notice information)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2018-0375975 A1 (SHARP KABUSHIKI KAISHA) 27 December 2018 (2018-12-27) <br> paragraphs [0026], [0036], [0038]-[0039], [0043], [0063]; and figures 2A-3C, 11A-11B | 1-15 |
| Y | KR 10-2021-0044975 A (SAMSUNG ELECTRONICS CO., LTD.) 26 April 2021 (2021-04-26) <br> paragraphs [0050], [0056], [0075], [0097]-[0098]; and figures 2, 4-6 | 1-15 |
| A | KR 10-2020-0112094 A (SAMSUNG ELECTRONICS CO., LTD.) 05 October 2020 (2020-10-05) <br> paragraphs [0037]-[0052]; and figures 3-5b | 1-15 |
| A | KR 10-2021-0140949 A (SAMSUNG ELECTRONICS CO., LTD.) 23 November 2021 (2021-11-23) <br> paragraphs [0157]-[0198]; and figures 11-13b | 1-15 |
| A | KR 10-2020-0132362 A (SAMSUNG ELECTRONICS CO., LTD.) 25 November 2020 (2020-11-25) <br> paragraphs [0120]-[0129]; and figures 13a-13g | 1-15 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 December 2025** | **18 December 2025** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2025/013900**

| Patent document cited in search report | | | Publication date (day/month/year) | Patent family member(s) | | | Publication date (day/month/year) |
|---|---|---|---|---|---|---|---|
| US | 2018-0375975 | A1 | 27 December 2018 | CN | 109891859 | A | 14 June 2019 |
| | | | | CN | 109891859 | B | 19 February 2021 |
| | | | | US | 10244088 | B2 | 26 March 2019 |
| | | | | WO | 2018-069977 | A1 | 19 April 2018 |
| KR | 10-2021-0044975 | A | 26 April 2021 | KR | 10-2849262 | B1 | 22 August 2025 |
| | | | | US | 11567532 | B2 | 31 January 2023 |
| | | | | US | 2021-0116965 | A1 | 22 April 2021 |
| | | | | WO | 2021-075752 | A1 | 22 April 2021 |
| KR | 10-2020-0112094 | A | 05 October 2020 | KR | 10-2757429 | B1 | 20 January 2025 |
| | | | | US | 11841744 | B2 | 12 December 2023 |
| | | | | US | 2022-0004228 | A1 | 06 January 2022 |
| | | | | WO | 2020-190100 | A1 | 24 September 2020 |
| KR | 10-2021-0140949 | A | 23 November 2021 | KR | 10-2889602 | B1 | 21 November 2025 |
| | | | | WO | 2021-230499 | A1 | 18 November 2021 |
| KR | 10-2020-0132362 | A | 25 November 2020 | US | 2020-0364021 | A1 | 19 November 2020 |
| | | | | WO | 2020-235885 | A1 | 26 November 2020 |

Form PCT/ISA/210 (patent family annex) (July 2022)